# EUROPEAN PATENT SPECIFICATION

(11) **EP 1 578 065 B1**
(45) Date of publication and mention of the grant of the patent: **29.06.2011**
(21) Application number: 03786248.9
(22) Date of filing: 24.12.2003
(51) Int. Cl.: H04L 12/42

(54) **Data transmission device, data transmission system, and method**
Datenübertragungseinrichtung, Datenübertragungssystem und Verfahren
Dispositif de transmission de données, système de transmission de données et procédé associé

(30) Priority: 26.12.2002 JP 2002377318
(43) Date of publication of application: 21.09.2005
(73) Proprietor: Panasonic Corporation, Kadoma-shi Osaka 571-8501 (JP)
(72) Inventor: MIZUGUCHI, Yuji, Hirakata-shi, Osaka 573-0165 (JP); YASUI, Nobuhiko, Moriguchi-shi, Osaka 570-0017 (JP); KATTA, Noboru, Kawasaki-shi, Kanagawa 216-0003, (JP); SAKAI, Takahisa, Yokohama-shi, Kanagawa 224-0003, (JP); TAKAHIRA, Yutaka, Neyagawa-shi, Osaka 572-0083 (JP); KAWADA, Hirotsugu, Osaka-shi, Osaka 543-0043 (JP); UMEI, Toshitomo, Settsu-shi, Osaka 566-0033 (JP); AKITA, Takashi, Osaka-shi, Osaka 532-0022 (JP)
(74) Representative: Balsters, Robert
(86) International application number: PCT/JP2003/016522
(87) International publication number: WO 2004/059919

(56) References cited:
- WO-A-01/06666
- WO-A1-02/30078
- JP-A- 60 004 348
- JP-A- 2000 092 020

## Description

### TECHNICAL FIELD

The present invention relates to a data transmission device, a data transmission system, and a method therefor, and more specifically to data transmission devices, a data transmission system, and a method therefor in which the data transmission devices are connected via a transmission line(s) so as to form a ring structure and in which they electrically communicate with one another in a single direction.

### BACKGROUND ART

In recent years, in car navigation or when doing the Internet, e.g., ITS (Intelligent Transport Systems), or transmitting image information in space such as the inside of a motor vehicle, high-volume and high-speed communication is required. A great deal of study is being made on communication systems for transmitting such digitized video or audio data, or digital data such as computer data or the like. Also, introduction of a network for transmitting digital data into even space such as the inside of a motor vehicle is becoming more and more widespread. For example, this intra-vehicle network uses a ring topology as its physical topology, and connects a plurality of nodes with the ring topology to form a unidirectional ring LAN, thus aiming to achieve integrated connection of an audio device, a navigation device, an information terminal device, or the like. For example, Media Oriented Systems Transport (hereinafter referred to as MOST) is used for the aforementioned ring LAN as an information communications protocol. The MOST refers to not only the communications protocol but also a method for constructing a distributed system. Data on a MOST network is transmitted with a frame being a basic unit, and frames are sequentially transmitted between the nodes in a single direction.

Noticeably, in the case of a ring LAN provided in the inside of a vehicle or the like, radiated noise may cause malfunction of another electronic device disposed on a motor vehicle or the like; besides, there is a necessity to perform accurate transmission without receiving any influence of radiated noise from another device. For this reason, a ring LAN using a conventional MOST presupposes that the communications protocol in the MOST is optical communication, and each node is connected by use of an optical-fiber cable, whereby protection from noise is improved while preventing generation of electromagnetic waves. Meanwhile, in a data transmission system disclosed in International Publication Pamphlet No. 02/30079, data communication is performed with electric signals using inexpensive cables such as twisted-pair cables or coaxial cables, while data transmission at high speed exceeding 20Mbps is realized with a little radiated noise and improved protection from noise.

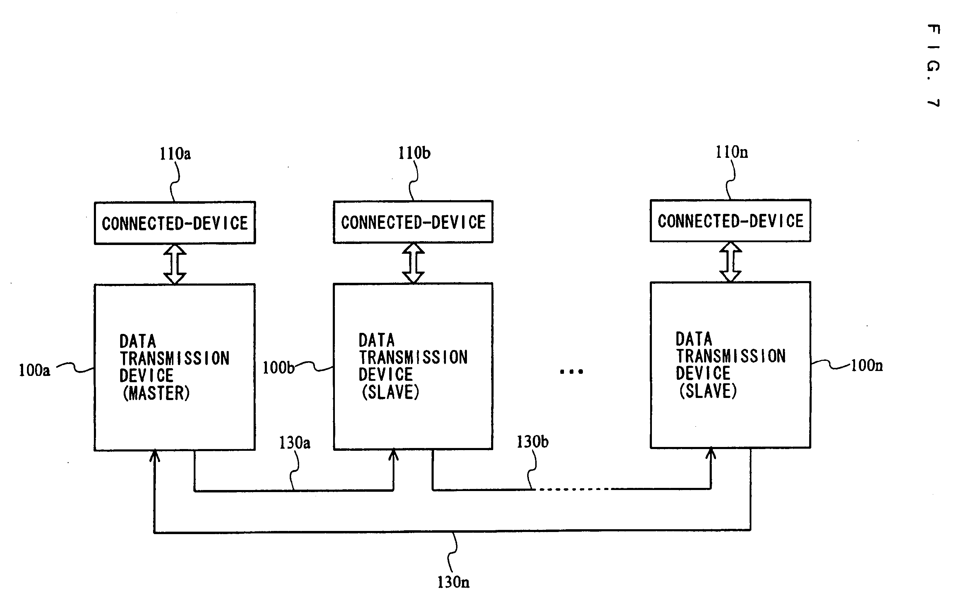

With reference to FIG. 7, a data transmission system using a ring network in which each node is connected with an inexpensive cable such as a twisted-pair cable or a coaxial cable is described. FIG. 7 is a block diagram showing a configuration of the ring network.

In FIG. 7, the ring network is composed of n data transmission devices 100a to 100n in which each node performs data transmission and reception. To the data transmission devices are connected connected-devices 110a to 110n each performing a process based on data transmitted by the data transmission device and outputting its resultant to the data transmission device. Note that as a common hardware configuration, the data transmission devices 100a to 100n and the connected-devices 110a to 110n respectively have integral structures. The data transmission devices 100a to 100n are connected via transmission lines 130a to 130n composed of coaxial cables or twisted-pair cables so as to forma ring structure. Each of the data transmission devices 100a to 100n has the same structure, having a processing section for processing the communications protocol of the ring network, a transmission section, and a reception section (which are not shown). For example, the transmission section provided in the data transmission device 100a outputs data to the reception section provided in the data transmission device 100b via the transmission line 130a; and the reception section provided in the data transmission device 100a receives data from the transmission section provided in the data transmission device 100n via the transmission line 130n.

A data transmission method in which the devices 100a to 100n conduct output to the transmission lines 130a to 130n is described. A digital data sequence from the connected-device or the like connected to each one of the data transmission devices 100a to 100n is divided by the respective transmission section into units of a predetermined number of bits to obtain data symbols, which are converted through mapping by use of a conversion table and a filtering process into an analog signal, which in turn is outputted to a corresponding one of the transmission lines 130a to 130n. The analog signal is outputted as a waveform in which mapped signal levels are in a predetermined cycle. Then, the reception section of each of the data transmission devices 100a to 100n receives the analog signal, which is decoded through a filtering process and inverse mapping into data symbols, which in turn are converted into a digital data sequence.

Here, in the case of an intra-vehicle network, while the network is not used, it is required that a mode (hereinafter referred to as a "zero-power mode") be available in which operation is suspended by turning off main hardware constituting the network in order to reduce power consumption to the least possible. In the case where transmission/reception involves conversion into an analog signal as described above, turning off the transmission section and the reception section makes it difficult for all data transmission devices to return from the zero-power mode in coordination with one another.

Another conceivable method is to allow the powers of the transmission section and reception section of the data transmission device to remain turned on while shifting the processing section and the connected-device to the zero-power mode. In this case, however, power consumption of the entire network is large in the zero-power mode. For example, consider the case where the ring network is provided inside a motor vehicle and operation of the entire network is to be suspended by shifting the ring network to the zero-power mode when the key of the motor vehicle is turned off. In this case, it is necessary to make power consumption as little as possible (to make it nearly zero) because while the key of the motor vehicle is off, there is no electric power generation by an engine, resulting in limited power capacity. In the zero-power mode as described above where the powers of the transmission section and reception section of the data transmission device remain turned on, it is difficult to restrict power consumption to zero. In other words, the zero-power mode where the powers of only the processing section of the data transmission device and the connected-device are turned off does not achieve an essential object of the zero-power mode. Document WO 01/06666 discloses a data transmission device connected to a ring-type data transmission network, which optically communicates with another device connected to the ring. If the reception section of the device detects cessation of the optical signal sent from a preceding device connected to the ring, the power supply section of the device stops supplying power to the reception section of the device.

Therefore, an object of the present invention is to provide a data transmission device, a data transmission system, and a method therefor, which, in a mode involving turning off main hardware constituting a ring network, allows power consumption in that mode to be low and in which it is easy to return to a normal operation mode.

### DISCLOSURE OF THE INVENTION

The present invention is defined by the subject-matter of independent claims 1, 8 and 16.

### BRIEF DESCRIPTION OF THE DRAWINGS

FIG. 1 is a block diagram showing a configuration of a data transmission system according to an embodiment of the present invention.
FIG. 2 is a functional block diagram showing a structure of a data transmission device 1 in FIG. 1.
FIG. 3 is a flowchart showing an operation of the data transmission system of FIG. 1 for shifting from a normal operation mode to a zero-power mode.
FIG. 4 is a flowchart showing an operation of the data transmission system of FIG. 1 for returning from the zero-power mode to the normal operation mode.
FIG. 5 is a flowchart showing another exemplary operation of the data transmission system of FIG. 1 for shifting from the normal operation mode to the zero-power mode.
FIG. 6 is a flowchart showing another exemplary operation of the data transmission system of FIG. 1 for returning from the zero-power mode to the normal operation mode.
FIG. 7 is a block diagram showing a configuration of a conventional ring network.

### BEST MODE FOR CARRYING OUT THE INVENTION

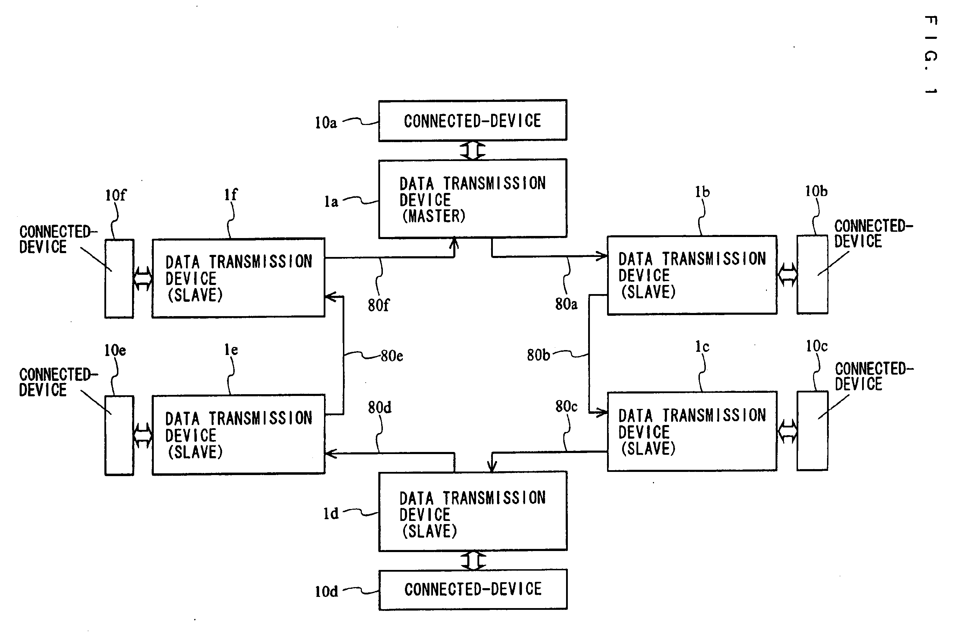

With reference to FIG. 1, a data transmission system according to an embodiment of the present invention is described. FIG. 1 is a block diagram showing a configuration of the data transmission system.

In FIG. 1, the data transmission system has a ring topology as its physical topology in which a plurality of nodes are connected according to the ring topology, thereby forming a unidirectional ring LAN. An example of such a data transmission system is described below where the nodes are composed of six data transmission devices 1a to 1f, which are connected via transmission lines 80a to 80f so as to form a ring structure, and transmitted data is transmitted via the transmission lines 80a to 80f in a single direction. To the data transmission devices 1a to 1f are connected connected-devices (e.g., audio devices, navigation devices, or information terminal devices) 10a to 10f each conducting a process based on data transmitted through the data transmission system and outputting its resultant to the data transmission system. Note that as a common hardware configuration, the data transmission devices 1a to 1f and the connected-devices 10a to 10f respectively have integral structures.

For example, Media Oriented Systems Transport (hereinafter referred to as MOST) is used as an information communications protocol for the above-described data transmission system. Data transmitted using the MOST as the communications protocol is transmitted with a frame being a basic unit, and frames are sequentially transmitted between the data transmission devices 1 in a single direction. In other words, the data transmission device 1a outputs data to the data transmission device 1b via the transmission line 80a. The data transmission device 1b outputs the data to the data transmission device 1c via the transmission line 80b. The data transmission device 1c outputs the data to the data transmission device 1d via the transmission line 80c. The data transmission device 1d outputs the data to the data transmission device 1e via the transmission line 80d. The data transmission device 1e outputs the data to the data transmission device 1f via the transmission line 80e. The data transmission device 1f outputs the data to the data transmission device 1a via the transmission line 80f. Inexpensive cables such as twisted-pair cables or coaxial cables are used as the transmission lines 80a to 80f, and the data transmission devices 1 mutually perform data communication with an electric signal. Here, in the data transmission system, the data transmission device 1a is a master, which transmits data with a clock of its own, and the other data transmission devices 1b to 1f are slaves, which operate synchronized with a clock generated at the master.

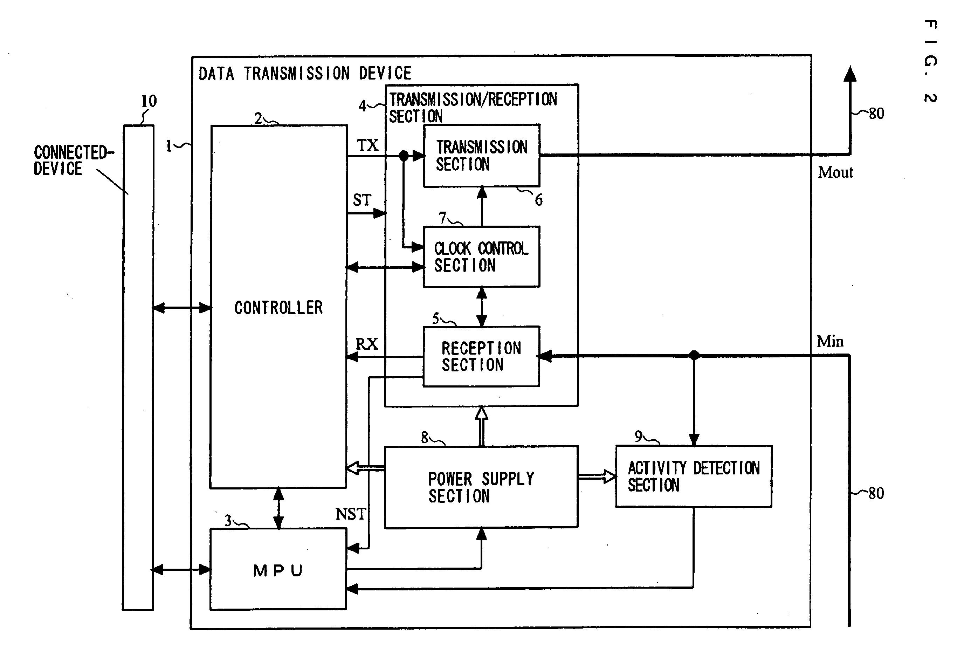

Next, with reference to FIG. 2, a structure of the data transmission device 1 is described. FIG. 2 is a functional block diagram showing the structure of the data transmission device 1. Note that the above-described plurality of data transmission devices 1a to 1f each have the same structure.

In FIG. 1, the data transmission devices 1 each includes a controller 2, a microcomputer (MPU) 3, a transmission/reception section 4, a power supply section 8, and an activity detection section 9. For example, the controller 2 is composed of an LSI and, in the case where the communications protocol used in the data transmission system is the MOST, performs a predetermined data transmission/reception process of the MOST. The description below is made using the MOST as an exemplary communications protocol used in the data transmission system.

To the controller 2 is connected the connected-device 10 which performs a process based on data transmitted in the data transmission system and outputs its resultant to the data transmission system. As its function, the controller 2 converts data from the connected-device 10 connected thereto into a protocol stipulated by the MOST, then outputting digital data TX to the transmission/reception section 4, and processes digital data RX outputted from the transmission/reception section 4, then transmitting it to the connected-device 10 connected thereto. In addition, the controller 2 outputs, to the transmission/reception section 4, an operation mode signal ST indicating a current operation mode.

The MPU 3 controls the controller 2, the transmission/reception section 4, and the aforementioned connected-device 10 based on a transmission mode of the data transmission device 1. For example, the MPU 3 controls the data transmission device 1 with respect to a reset function, a power control (a zero-power mode control, described below, on the controller 2 and the transmission/reception section 4), a master/slave selection process, a process of shifting to a diag mode, a scramble transmission function, etc.

A clock control section 7 controls a clock of the data transmission device 1: for example, it reproduces a clock generated at another data transmission device 1, reproduces a clock for the controller 2, and outputs a clock used in a transmission section 6.

The transmission/reception section 4, typically composed of an LSI, includes a reception section 5, the transmission section 6, and the clock control section 7. The reception section 5 receives an electric signal Min inputted from a preceding data transmission device 1 via the transmission line 80, and, based on a clock reproduced at the clock control section 7, converts the electric signal Min into a digital signal RX, and then outputs it to the controller 2. In addition, the reception section 5 reproduces a clock component included in the electric signal Min and outputs it to the clock control section 7. In addition, the reception section 5 outputs a reception operation mode signal NST to the MPU 3 based on the presence or absence of input of the electric signal Min from the preceding data transmission device 1 via the transmission line 80. Based on the clock of the clock control section 7, the transmission section 6 converts the digital data TX outputted from the controller 2 into an electric signal Mout, then outputting it to a successive data transmission device 1 via the transmission line 80.

A function of the transmission section 6 is described in detail. The transmission section 6 has inside it an S/P (serial/parallel) conversion section, a mapping section, a roll off filter, a DAC (a digital to analog converter), a differential driver, a training signal generation section, and the like. For example, by their operation, the transmission section 6 converts the digital data TX into an analog electric signal Mout subjected to eight-value mapping, then outputting it. The function of the transmission section 6 is described below with reference to an exemplary case where conversion is made into an analog signal Mout subjected to eight-value mapping.

First, based on a clock controlled by the clock control section 7, the transmission section 6 selects data (e.g., digital data TX) to be transmitted to the transmission line 80 and performs an S/P conversion process. This S/P conversion process converts serial digital data TX outputted from the controller 2 into parallel form in order to perform multilevel transmission. In the case where the communications protocol is the MOST, since the output from the controller 2 is made in the form of serial digital data TX, the S/P conversion process converts serially inputted data into two-bit parallel data. Regarding the clock, by the clock control section 7, used by the transmission section 6: in the case where the data transmission device 1 is the master, a clock reproduced by a transmission-side PLL (Phase Locked Loop) based on a clock held by itself is used; whereas in the case where it is a slave, a clock component of a signal received from the transmission line 80 is extracted, and a clock reproduced by a reception-side PLL is used as a system clock. The transmission-side PLL and the reception-side PLL are both contained in the clock control section 7.

Next, the transmission section 6 maps the two-bit parallel data subjected to the S/P conversion and a training signal TS outputted from the training signal generation section onto one of eight values of symbols based on the aforementioned system clock. In this mapping, in order that another data transmission device 1 disposed on the receiving side may perform clock reproduction, the two-bit parallel data is allocated alternately to upper four values of symbols and lower four values of symbols among the eight values of symbols. In addition, in order to exclude influence of fluctuation or difference of direct-current components between transmission and reception, the mapping is performed based on difference from a previous value. Moreover, regarding the signal after mapping, the transmission section 6 limits the bandwidth of the electric signal which is to be transmitted and controls intersymbol interference by using a roll off filter. For this roll off filter, which is, for example, a wave-shaping filter, a 33-tap, 12-bit FIR filter characterized by performing route distribution on a roll-off rate of 100% with a sampling frequency four times a symbol rate is used, for example.

Next, by using the DAC, the transmission section 6 converts into an analog signal the signal whose bandwidth has been limited by the roll off filter. Then, using the differential driver, the transmission section 6 amplifies the intensity of the analog signal outputted from the DAC and converts it into a differential signal, then sending it to the transmission line 80. For a pair of lead wires included in the transmission line 80, the differential driver transmits the electric signal, which is sent, to one side (a positive side) of the lead wires in the transmission line 80, while transmitting a signal whose positive and negative are inverse to those of the electric signal to the other side (a negative side) in the transmission line 80. Thus, the electric signals of the positive side and the negative side are sent, as a pair, to the transmission line 80, whereby influence of noise radiated from the transmission line 80 and common mode noise introduced from outside can be reduced.

The training signal generation section in the transmission section 6 generates a predetermined training signal TS for setting determination levels, which serve as a criterion for data determination made in association with the other data transmission device 1 disposed on the receiving side. Similarly to the above-described digital data TX, the training signal TS generated by the training signal generation section is subjected to mapping, analog conversion, and the like, and then sent to the transmission line 80.

Next, a function of the reception section 5 is described in detail. The reception section 5 has a differential receiver, an ADC (analog to digital converter), a roll off filter, a inverse mapping section, a P/S (Parallel/Serial) conversion section, a clock reproduction section, and the like.

First, by using the differential receiver, the reception section 5 converts an electric signal Min inputted from the transmission line 80 into a voltage signal. As described above, transmission is performed with a differential signal, which is composed of the positive side and the negative side paired for the pair of lead wires contained in the transmission line 80. The differential receiver, which determines a signal based on difference between the positive side and the negative side, works effectively against influence of common mode noise introduced from outside. Then, by using the ADC, the reception section 5 converts into a digital signal the voltage signal obtained by the conversion by the differential receiver.

Next, by using the roll off filter, the reception section 5 performs noise reduction on the digital signal obtained by the conversion by the ADC. For this roll off filter, which is also an FIR filter for waveform shaping, an FIR filter with sixteen times a symbol rate is used, for example. It realizes a roll-off characteristic without intersymbol interference in conjunction with the above-described roll off filter of the transmission section 6. Then, by using the inverse mapping section and based on a clock reproduced by the clock reproduction section, the reception section 5 reproduces data before being subjected to mapping by the mapping section on the transmitting side based on difference between a received data value and a previous value. A process at the inverse mapping section is performed, using as a criterion the determination levels set by the training signal TS as described above, and the determination levels are used as ideal values in difference. By this inverse mapping process, a received signal is converted into parallel data. Then, the reception section 5 performs a P/S conversion process on the parallel data obtained after the inverse mapping process to obtain serial digital data RX and outputs it to the controller 2.

The clock reproduction section in the reception section 5 detects the clock component of the signal received from the transmission line 80, which is outputted from the ADC, thereby reproducing a transmission line clock. The clock reproduced by the clock reproduction section is outputted to the clock control section 7 to be used as a reference clock for the reception-side PLL.

Based on power control by the MPU 3, the power supply section 8 supplies power to the controller 2, the transmission/reception section 4, the activity detection section 9, etc. The activity detection section 9, which is typically composed of an electric circuit having a comparator, etc., monitors the electric signal Min from the transmission line 80, which is inputted to the data transmission device. In addition, if an electric signal Min is detected in a zero-power mode described below, the activity detection section 9 reports the detection to the MPU 3.

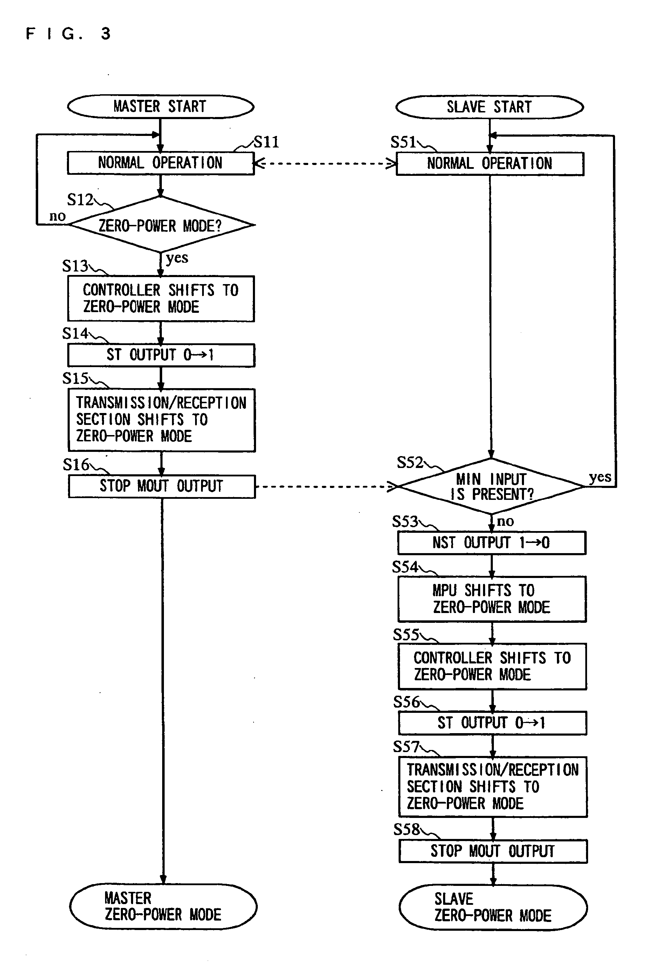

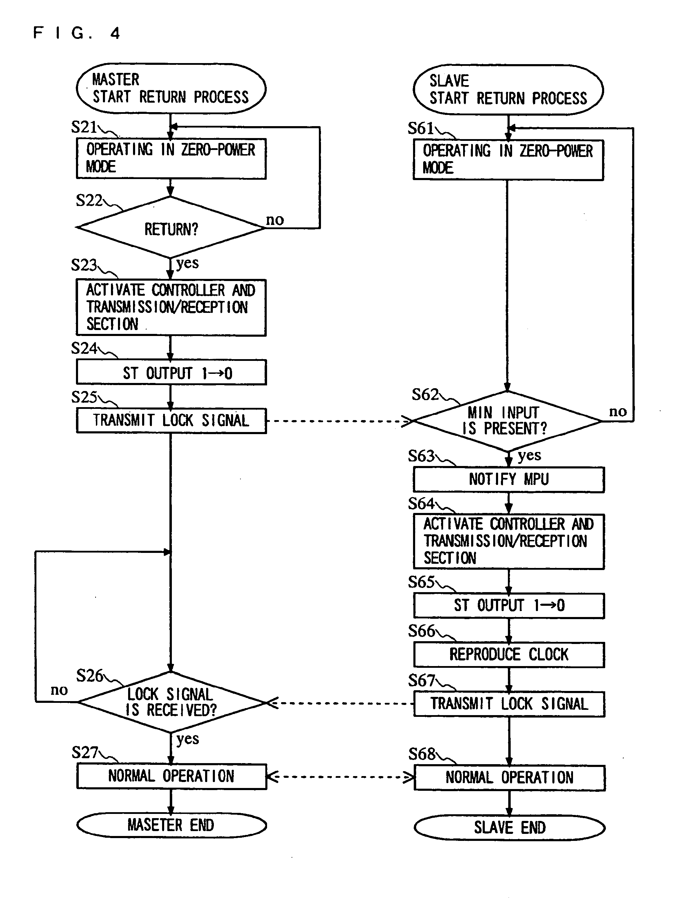

In the case of a data transmission system inside a vehicle, power capacity available for the data transmission system is limited, for example; therefore, while a network is not used, it is necessary to shift to a mode (zero-power mode) in which operation is suspended while main hardware constituting the network is turned off to consume as little power as possible. With reference to FIGS. 3 and 4, a process, in the data transmission system, of shifting from a normal operation mode to the zero-power mode and thereafter returning from the zero-power mode to the normal operation mode is described below. FIG. 3 is a flowchart showing an operation of the data transmission system for shifting from the normal operation mode to the zero-power mode, and FIG. 4 is a flowchart showing an operation of the data transmission system for returning from the zero-power mode to the normal operation mode.

First, with reference to FIG. 3, the operation of the data transmission system for shifting from the normal operation mode to the zero-power mode is described. The shifting operation of the data transmission device described below is applicable to any system in which a plurality of data transmission devices 1 are connected so as to form a ring structure. However, for making a specific explanation, the description is made with reference to an exemplary case where six data transmission devices 1a to 1f are connected via transmission lines 80a to 80f so as to form a ring structure (see FIG. 1). Note that as described above, in the data transmission system, the data transmission device 1a is the master which transmits data with the clock of its own, while the other data transmission devices 1b to 1f are slaves which operate synchronized with a clock generated at the master.

In FIG. 3, all data transmission devices 1a to 1f connected to the data transmission system are in the normal operation, exchanging data between one another (steps S11 and S51) The master data transmission device 1a determines, during the normal operation, whether or not to shift to the zero-power mode (step S12), and, if the shift to the zero-power mode is not conducted, continues the above step S11.

The determination in step S12 as to the shift to the zero-power mode is typically performed by the MPU 3 included in the master data transmission device 1a. For example, in the case where the data transmission system is provided inside a motor vehicle, the MPU 3 performs the shift to the zero-power mode as a result of a key of the motor vehicle being turned off, or determines the shift to the zero-power mode based on an instruction given by a user operating a switch. In the case where a condition for the shift to the zero-power mode is previously set in the controller 2 included in the master data transmission device 1a, the controller 2 may determine the shift to the zero-power mode based on the condition for the shift.

If, at the above-described step S12, the MPU 3 included in the master data transmission device 1a determines to shift to the zero-power mode, the MPU 3 notifies the controller 2 of its own device to shift to the zero-power mode, and the controller 2 shifts to the zero-power mode (step S13). Next, in order to notify the transmission/reception section 4 of its own device to shift to the zero-power mode, the controller 2 included in the master data transmission device 1a changes an operation mode signal ST from Low(0) to High(1) and outputs it to the transmission/reception section 4, and stops output of the digital data TX (step S14).

Next, the transmission/reception section 4 included in the master data transmission device 1a shifts to the zero-power mode as a result of the output of the operation mode signal ST from the controller 2 of its own device becoming High (1) and the output of the digital data TX having been stopped (step S15). Then, the transmission/reception section 4 stops output of the electric signal Mout being outputted from the transmission section 6 to the transmission line 80a (step S16).

Through the processes of the above-described steps S12 to S16, the master data transmission device 1a completes the shift to the zero-power mode. This zero-power mode eliminates the need of the operation of the controller 2 and transmission/reception section 4 included in the data transmission device 1a. Through the processes of the above-described steps S12 to S16, the controller 2 and the transmission/reception section 4 are able to reduce power consumption to the utmost by their own functions. Note that, however, after the process of the above-described step S16, the MPU 3 may perform power control on the power supply section 8 to stop supplying power to the controller 2 and the transmission/reception section 4. Moreover, if necessary, power supply to the connected-device 10a connected to the data transmission device 1a may also be stopped.

In the above-described data transmission system that shifts from the normal operation mode to the zero-power mode, the controller 2 outputs the operation mode signal ST of High(1) to the transmission/reception section 4 at step S14, and in response thereto, the transmission/reception section 4 shifts to the zero-power mode. However, the MPU 3 may directly instruct the transmission/reception section 4 to shift to the zero-power mode by use of an operation mode signal. In this case, regarding the master data transmission device 1, if the MPU 3 thereof determines to shift to the zero-power mode at the above-described step S12, the MPU 3 notifies the transmission/reception section 4 of its own device to shift to the zero-power mode by use of the operation mode signal, and then the transmission/reception section 4 shifts to the zero-power mode.

In the case where the MPU 3 directly instructs the transmission/reception section 4 to shift to the zero-power mode, power supply to the transmission/reception section 4 may be stopped in order for the transmission/reception section 4 to shift to the zero-power mode. In this case, regarding the master data transmission device 1, if the MPU 3 thereof determines to shift to the zero-power mode at the above-described step S12, the MPU 3 stops power supply from the power supply section 8 of its own device to the transmission/reception section 4, whereby the transmission/reception section 4 shifts to the zero-power mode.

Meanwhile, the slave data transmission devices 1b to 1f each determines, in the aforementioned normal operation, the presence or absence of an input of the electric signal Min from the transmission line 80 (step S52), and, if there is an input of the electric signal Min, continues the above-described step S51. Then, if the master data transmission device 1a performs the above-described step S16, thereby stopping the output of the electric signal Mout being outputted to the transmission line 80a, the input of the electric signal Min to the slave data transmission device 1b successively connected thereto via the transmission line 80a ceases. If the input of the electric signal Min has ceased, the transmission/reception section 4 included in the slave data transmission device 1b changes the reception operation mode signal NST from High(1) to Low(0) and outputs it to the MPU 3 of its own device (step S53).

Next, in response to the output of the reception operation mode signal NST becoming Low(0), the MPU 3 included in the slave data transmission device 1b shifts to the zero-power mode (step S54). Then, the MPU 3 notifies the controller 2 of its own device to shift to the zero-power mode.

Next, the controller 2 included in the slave data transmission device 1b shifts to the zero-power mode (step S55), and, in order to notify the transmission/reception section 4 of its own device to shift to the zero-power mode, changes the operation mode signal ST from Low(0) to High(1) and outputs it to the transmission/reception section 4, then stopping the output of the digital data TX (step S56).

Next, as a result of the output of the operation mode signal ST from the controller 2 of its own device becoming High(1) and the output of the digital data TX having been stopped, the transmission/reception section 4 included in the slave data transmission device 1b shifts to the zero-power mode (step S57). Then, the transmission/reception section 4 stops the output of the electric signal Mout being outputted from the transmission section 6 to the transmission line 80b (step S58).

Through the processes of the above-described steps S52 to S58, the slave data transmission device 1b completes the shift to the zero-power mode. Similarly to the master data transmission device 1a this zero-power mode eliminates the need of the operation of the controller 2 and transmission/reception section 4 included in the slave data transmission device 1b. Through the processes of the above-described steps S52 to S58, the controller 2 and the transmission/reception section 4 are able to reduce power consumption to the utmost by their own functions. Note that, however, after the process of the above-described step S58, the MPU 3 may perform power control on the power supply section 8, thereby stopping power supply to the controller 2 and the transmission/reception section 4. Moreover, if necessary, power supply to the connected-device 10b connected to the data transmission device 1b may also be stopped.

In the above-described data transmission system that shifts from the normal operation mode to the zero-power mode, the controller 2 outputs the operation mode signal ST of High(1) to the transmission/reception section 4 at step S56, and in response thereto, the transmission/reception section 4 shifts to the zero-power mode. However, the MPU 3 may directly instruct the transmission/reception section 4 to shift to the zero-power mode. In this case, regarding the slave data transmission device 1, if the MPU 3 of its own has shifted to the zero-power mode at the above-described step S54, the MPU 3 notifies the transmission/reception section 4 of its own device to shift to the zero-power mode, and then the transmission/reception section 4 shifts to the zero-power mode.

In the case where the MPU 3 directly instructs the transmission/reception section 4 to shift to the zero-power mode, power supply to the transmission/reception section 4 may be stopped in order for the transmission/reception section 4 to shift to the zero-power mode. In this case, regarding the slave data transmission device 1, if the MPU 3 of its own has shifted to the zero-power mode at the above-described step S54, the MPU 3 stops power supply from the power supply section 8 of its own device to the transmission/reception section 4, whereby the transmission/reception section 4 shifts to the zero-power mode.

The operation for shifting to the zero-power mode applied to the data transmission device 1b also applies to the other slave data transmission devices 1c to 1f. That is, as a result of the input of the electric signal Min inputted from the transmission line 80b having been stopped, the data transmission device 1c shifts to the zero-power mode; as a result of the input of the electric signal Min inputted from the transmission line 80c having been stopped, the data transmission device 1d shifts to the zero-power mode; as a result of the input of the electric signal Min inputted from the transmission line 80d having been stopped, the data transmission device 1e shifts to the zero-power mode; and, as a result of the input of the electric signal Min inputted from the transmission line 80e having been stopped, the data transmission device 1f shifts to the zero-power mode. The combination of these operations causes all data transmission devices 1a to 1f connected to the data transmission system to shift to the zero-power mode.

Next, with reference to FIG. 4, the operation of the data transmission system for returning from the zero-power mode to the normal operation mode is described. The return operation of the data transmission device described below is also applicable to any system in which a plurality of data transmission devices 1 are connected so as to form a ring structure. However, for making a specific explanation, the description is made with reference to an exemplary case where six data transmission devices 1a to 1f are connected via transmission lines 80a to 80f so as to form a ring structure (see FIG. 1). Note that, as described above, when the data transmission system returns, the data transmission device 1a is the master which transmits data with the clock of its own, and the other data transmission devices 1b to 1f are slaves which operate synchronized with the clock generated at the master.

In FIG. 4, all data transmission devices 1a to 1f connected to the data transmission system are all operating in the zero-power mode (steps S21 and S61). Then, during the aforementioned zero-power mode, the master data transmission device 1a determines whether or not to return to the normal operation mode (step S22), and, if it does not return to the normal operation mode, continues the above-described step S21.

The determination in step S22 as to returning to the normal operation mode is typically performed based on a condition for return, which is set in the MPU 3 included in the master data transmission device 1a. For example, in the case where the data transmission system is provided inside a motor vehicle and has shifted to the zero-power mode as a result of a key of the motor vehicle being turned off, the MPU 3 may determine to return to the normal operation mode as a result of the key of the motor vehicle being turned on, or may determine to return to the normal operation mode based on an instruction given by a user operating a switch.

If the MPU 3 included in the master data transmission device 1a has determined at the above-described step S22 to return to the normal operation mode, the MPU 3 activates the controller 2 and transmission/reception section 4 of its own device (step S23) . Regarding the activation at the above-described step S23, in the case where power supply to be supplied from the power supply section 8 has been stopped in order for the controller 2 and the transmission/reception section 4 to shift to the zero-power mode, the MPU 3 controls the power supply section 8 to resume power supply to the controller 2 and the transmission/reception section 4. Further, in the case where the controller 2 and the transmission/reception section 4 have limited power consumption to zero by their own functions to shift to the zero-power mode, the MPU 3 performs an activation process by instructing each of them to become activated and reset. In this activation process, the controller 2 included in the master data transmission device 1a is outputting the operation mode signal ST as Low(0) to the transmission/reception section 4 (step S24).

Next, based on the operation mode signal ST outputted as Low(0) from the controller 2 of its own device, the transmission/reception section 4 included in the master data transmission device 1a, which has been activated by the above-described step S23, shifts to the normal operation mode. Then, the transmission/reception section 4 performs an initialization operation on a physical layer, and, in the initialization operation, establishes clock synchronization with each data transmission device. Based on an output clock of a transmission PLL controlled by the clock control section 7 of its own device, the transmission/reception section 4 transmits, to the transmission line 80a, a lock signal LS for establishing clock synchronization with another data transmission device, as the electric signal Mout (step S25). This lock signal LS is, for example, a sinusoidal signal based on a clock frequency of the transmission PLL included in the master data transmission device 1a.

Meanwhile, the slave data transmission devices 1b to 1f are each operating in the zero-power mode, and the activity detection section 9 of its own device monitors the presence or absence of input of the electric signal Min from the transmission line 80 (step S62). If there is no input of the electric signal Min, the above-described step S61 continues. Then, if the master data transmission device 1a performs the above-described step S25, thereby outputting the lock signal LS as the electric signal Mout to the transmission line 80a, the input of the electric signal Min to the slave data transmission device 1b successively connected thereto via the transmission line 80a is started. If any input of the electric signal Min is detected, the activity detection section 9 included in the slave data transmission device 1b outputs to the MPU 3 of its own device an activity detection signal for indicating that detection (step S63).

If, at step 563, there is any input of the activity detection signal from the activity detection section 9 included in the slave data transmission device 1b, the MPU 3 of its own device activates the controller 2 and transmission/reception section 4 of its own device (step S64). Regarding the activation at the above-described step S64, in the case where power supply to be supplied from the power supply section 8 has been stopped in order for the controller 2 and the transmission/reception section 4 to shift to the zero-power mode, the MPU 3 controls the power supply section 8 to resume power supply to the controller 2 and the transmission/reception section 4. Further, in the case where the controller 2 and the transmission/reception section 4 have limited power consumption to zero by their own functions to shift to the zero-power mode, the MPU 3 performs an activation process by instructing each of them to become activated and reset. In this activation process, the controller 2 included in the slave data transmission device 1b outputs the operation mode signal ST as Low(0) to the transmission/reception section 4 (step S65).

Next, based on the operation mode signal ST outputted as Low(0) from the controller 2 of its own device, the transmission/reception section 4 included in the slave data transmission device 1b, which has been activated by the above-described step S64, shifts to the normal operation mode. Then, the transmission/reception section 4 reproduces a clock with the clock reproduction section of its own device (step S66), and transmits a lock signal LS to the transmission line 80b based on the clock outputted by its own reception PLL (step S67).

The operation for returning to the normal operation mode applied to the data transmission device 1b also applies to the other slave data transmission devices 1c to 1f. That is, as a result of the activity detection section 9 detecting an input of the electric signal Min inputted from the transmission line 80b, the data transmission device 1c returns to the normal operation mode; as a result of the activity detection section 9 detecting an input of the electric signal Min inputted from the transmission line 80c, the data transmission device 1d returns to the normal operation mode; as a result of the activity detection section 9 detecting an input of the electric signal Min inputted from the transmission line 80d, the data transmission device 1e returns to the normal operation mode; and, as a result of the activity detection section 9 detecting an input of the electric signal Min inputted from the transmission line 80e, the data transmission device 1f returns to the normal operation mode. That is, as a result of the combination of these return operations, the return to the zero-power mode is performed in regular order, starting with the master data transmission device 1a. Then, the transmission/reception section 4 of the data transmission device 1f reproduces a clock with the clock reproduction section of its own device, and transmits a lock signal LS to the transmission line 80f based on the clock outputted from the reception PLL.

After transmitting the lock signal LS to the data transmission device 1b at the above-described step S25, the master data transmission device 1a continues to be ready for a reception of the lock signal LS transmitted from the data transmission device 1f via the transmission line 80f (step S26). Then, if the slave data transmission device 1f performs the above-described step S67, thereby outputting the lock signal LS as the electric signal Mout to the transmission line 80f, the transmission/reception section 4 included in the master data transmission device 1a receives the lock signal LS from the transmission line 80f and reproduces the clock with the clock reproduction section of its own device. Thus, clock synchronization of the entire data transmission system is established.

Thereafter, the data transmission devices 1a to 1f transmit and receive a training signal for setting a criterion for data reception between them, thereby setting a criterion for data determination in the normal operation mode, and then start data transmission and reception (steps S27 and S68). Then, the process according to this flowchart is completed.

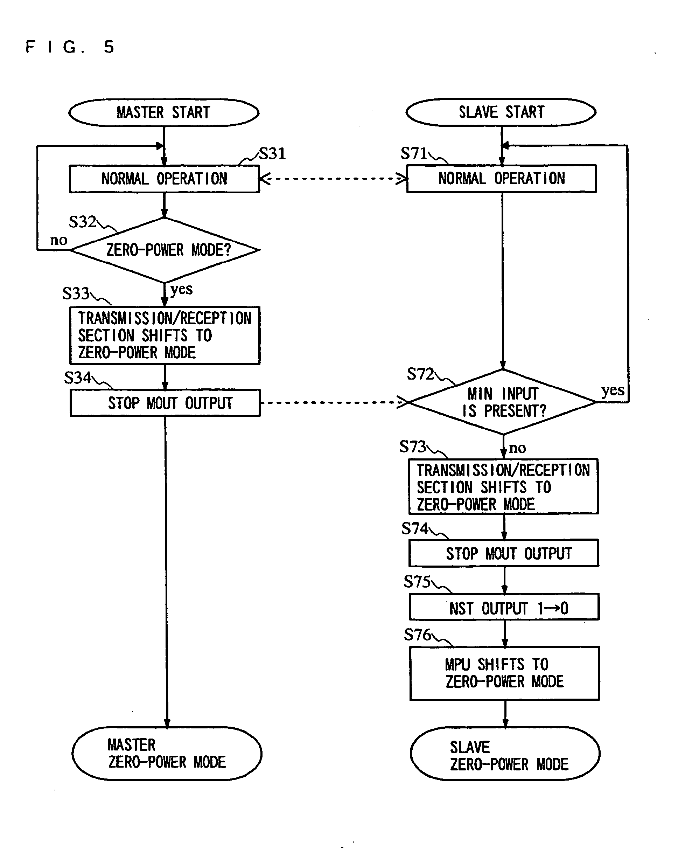

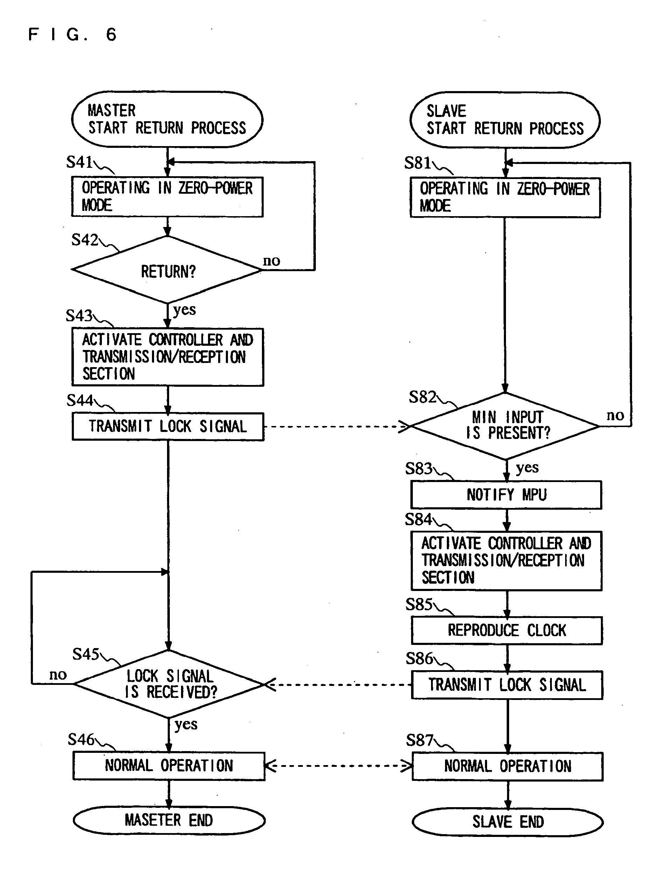

Note that in the above-described data transmission system shifting from the normal operation mode to the zero-power mode, the transmission/reception section 4 stops outputting the electric signal Mout to the successive data transmission device 1, as a result of the controller 2 making notification to the transmission/reception section 4 at step S14 or S56. Alternatively, the MPU 3 directly outputs to the transmission/reception section 4 a notification of the operation mode signal for shifting to the zero-power mode, or stops power supply to the transmission/reception section 4, so that the transmission/reception section 4 stops output of the electric signal Mout to the successive data transmission device 1. That is, in the above-described data transmission system shifting from the normal operation mode to the zero-power mode, in response to, for example, a notification by the MPU 3 or controller 2 of its own device, the transmission/reception section 4 stops output of the electric signal Mout to the successive data transmission device 1. However, the transmission/reception section 4 may stop output of the electric signal Mout to the successive data transmission device 1 without any instruction from another component. With reference to FIG. 5 and FIG. 6, the aforementioned process in which the transmission/reception section 4 stops output of the electric signal Mout to the successive data transmission device 1 is described below. Note that FIG. 5 is a flowchart showing an operation of the data transmission system for shifting from the normal operation mode to the zero-power mode, and FIG. 6 is a flowchart showing an operation of the data transmission system for returning from the zero-power mode to the normal operation mode.

First, with reference to FIG. 5, the operation of the data transmission system for shifting from the normal operation mode to the zero-power mode is described. The shifting operation of the data transmission device described below is applicable to any system in which a plurality of data transmission devices 1 are connected so as to form a ring structure. However, for making a specific explanation, the description is made with reference to an exemplary case where six data transmission devices 1a to 1f are connected via transmission lines 80a to 80f so as to form a ring structure (see FIG. 1). Note that as described above, in the data transmission system, the data transmission device 1a is the master which transmits data with the clock of its own, while the other data transmission devices 1b to 1f are slaves which operate synchronized with a clock generated at the master.

In FIG. 5, operations at steps S31, S32, and S71 of the data transmission devices 1a to 1f are identical to those of the above-described steps S11, S12, and S51; therefore, a detailed explanation thereof is omitted.

If, at the above-described step S32, the MPU 3 included in the master data transmission device 1a has determined to shift to the zero-power mode, the MPU 3 uses an operation mode signal or the like to notify the transmission/reception section 4 of its own device to shift to the zero-power mode, and the transmission/reception section 4 shifts to the zero-power mode (step S33). Then, the transmission/reception section 4 stops output of the electric signal Mout being outputted from the transmission section 6 to the transmission line 80a (step S34). Note that, at step S33, the transmission/reception section 4 may be caused to shift to the zero-power mode by the MPU 3 stopping supplying power to the transmission/reception section 4. Further, at the above-described step S33, the MPU 3 may also notify the controller 2 of its own device to shift to the zero-power mode, so that the controller 2 shifts to the zero-power mode. In this case, the controller 2 included in the master data transmission device 1a stops output of the digital data TX.

Through the processes of the above-described steps S32 to S34, the master data transmission device 1a completes the shift to the zero-power mode. This zero-power mode eliminates the need of the operation of the controller 2 and transmission/reception section 4 included in the data transmission device 1a. Through the processes of the above-described steps S32 to S34, the controller 2 and the transmission/reception section 4 are able to reduce power consumption to the utmost by their own functions. Note that, however, after the process of the above-described step S33, the MPU 3 may perform power control on the power supply section 8 to stop supplying power to the controller 2 and the transmission/reception section 4. Moreover, if necessary, power supply to the connected-device 10a connected to the data transmission device 1a may also be stopped.

Meanwhile, the slave data transmission devices 1b to 1f each determines, in the aforementioned normal operation, the presence or absence of an input of the electric signal Min from the transmission line 80 (step S72), and, if there is an input of the electric signal Min, continues the above-described step S71. Then, if the master data transmission device 1a performs the above-described step S34, thereby stopping the output of the electric signal Mout being outputted to the transmission line 80a, the input of the electric signal Min to the slave data transmission device 1b successively connected thereto via the transmission line 80a ceases. By detecting that the input of the electric signal Min has ceased, the transmission/reception section 4 included in the master data transmission device 1b shifts the transmission/reception section 4 itself to the zero-power mode (step S73), and stops output of the electric signal Mout (step S74). Then, the transmission/reception section 4 in the data transmission device 1b changes the reception operation mode signal NST from High(1) to Low(0) and outputs it to the MPU 3 of its own device (step S75). Next, in response to the output of the reception operation mode signal NST being changed to Low (0), the MPU 3 of the data transmission device 1b shifts to the zero-power mode (step S76). Note that, in the process of step S76, the MPU 3 of the data transmission device 1b may notify the controller 2 of its own device to shift to the zero-power mode. In this case, the controller 2 included in the data transmission device 1b shifts to the zero-power mode and stops output of the digital data TX.

Through the processes of the above-described steps S72 to S76, the slave data transmission device 1b completes the shift to the zero-power mode. Similarly to the master data transmission device 1a, this zero-power mode eliminates the need of the operation of the controller 2 and transmission/reception section 4 included in the slave data transmission device 1b. Through the processes of the above-described steps S72 to S76, the controller 2 and the transmission/reception section 4 are able to reduce power consumption to the utmost by their own functions. Note that, however, after the process of the above-described step S76, the MPU 3 may perform power control on the power supply section 8, thereby stopping power supply to the controller 2 and the transmission/reception section 4. Moreover, if necessary, power supply to the connected-device 10b connected to the data transmission device 1b may also be stopped.

The operation for shifting to the zero-power mode applied to the data transmission device 1b also applies to the other slave data transmission devices 1c to 1f. That is, as a result of the input of the electric signal Min inputted from the transmission line 80b having been stopped, the data transmission device 1c shifts to the zero-power mode; as a result of the input of the electric signal Min inputted from the transmission line 80c having been stopped, the data transmission device 1d shifts to the zero-power mode; as a result of the input of the electric signal Min inputted from the transmission line 80d having been stopped, the data transmission device 1e shifts to the zero-power mode; and, as a result of the input of the electric signal Min inputted from the transmission line 80e having been stopped, the data transmission device 1f shifts to the zero-power mode. The combination of these operations causes all data transmission devices 1a to 1f connected to the data transmission system to shift to the zero-power mode. In contrast to the operation of steps S52 to S58 shown in FIG. 3, the operation of steps S72 to S76 allows the transmission/reception section 4 itself to stop output of the electric signal Mout; therefore, the entire data transmission system shifts to the zero-power mode quickly.

The foregoing description refers to the case where the data transmission device 1 that starts the operation for shifting the data transmission system from the normal operation mode to the zero-power mode is the data transmission device 1a which serves as the master in clock synchronization. Note that, however, any of the other data transmission devices 1b to 1n may start the operation for shifting to the zero-power mode. In this case, needless to say, one of the data transmission devices 1b to 1n which starts the operation for shifting to the zero-power mode performs the operation of the master in FIG. 5, and the remaining data transmission devices perform the operations of slaves in FIG. 5, whereby all data transmission devices 1a to 1n are able to shift to the zero-power mode in a similar manner.

Next, with reference to FIG. 6, the operation of the data transmission system for returning from the zero-power mode to the normal operation mode is described. The return operation of the data transmission device described below is also applicable to any system in which a plurality of data transmission devices 1 are connected so as to form a ring structure. However, for making a specific explanation, the description is made with reference to an exemplary case where six data transmission devices 1a to 1f are connected via transmission lines 80a to 80f so as to form a ring structure (see FIG. 1). Note that, as described above, when the data transmission system returns, the data transmission device 1a is the master which transmits data with the clock of its own, and the other data transmission devices 1b to 1f are slaves which operate synchronized with the clock generated at the master.

In FIG. 6, the operation at steps S41, S42, and S81 of the data transmission devices 1a to 1f are identical to that of the above-described steps S21, S22, and S61; therefore, a detailed description thereof is omitted.

If the MPU 3 included in the master data transmission device 1a has determined at the above-described step S42 to return to the normal operation mode, the MPU 3 activates the controller 2 and transmission/reception section 4 of its own device (step S43). Regarding the activation at the above-described step S43, in the case where power supply to be supplied from the power supply section 8 has been stopped in order for the controller 2 and the transmission/reception section 4 to shift to the zero-power mode, the MPU 3 controls the power supply section 8 to resume power supply to the controller 2 and the transmission/reception section 4. Further, in the case where the controller 2 and the transmission/reception section 4 have limited power consumption to zero by their own functions to shift to the zero-power mode, the MPU 3 performs an activation process by instructing each of them to become activated and reset.

Next, the transmission/reception section 4 included in the master data transmission device 1a, which has been activated by the above-described step S43, shifts to the normal operation mode. Then, the transmission/reception section 4 performs an initialization operation on a physical layer, and, in the initialization operation, establishes clock synchronization with each data transmission device. Based on an output clock of a transmission PLL controlled by the clock control section 7 of its own device, the transmission/reception section 4 transmits, to the transmission line 80a, a lock signal LS for establishing clock synchronization with another data transmission device, as the electric signal Mout (step S44).

Meanwhile, the slave data transmission devices 1b to 1f are each operating in the zero-power mode, and the activity detection section 9 of its own device monitors the presence or absence of input of the electric signal Min from the transmission line 80 (step S82). If there is no input of the electric signal Min, the above-described step S81 continues. Then, if the master data transmission device 1a performs the above-described step S44, thereby outputting the lock signal LS as the electric signal Mout to the transmission line 80a, the input of the electric signal Min to the slave data transmission device 1b successively connected thereto via the transmission line 80a is started. If any input of the electric signal Min is detected, the activity detection section 9 included in the slave data transmission device 1b outputs to the MPU 3 of its own device an activity detection signal for indicating that detection (step S83).

If, at step S83, there is any input of the activity detection signal from the activity detection section 9 included in the slave data transmission device 1b, the MPU 3 of its own device activates the controller 2 and transmission/reception section 4 of its own device (step S84). Regarding the activation at the above-described step S84, in the case where power supply to be supplied from the power supply section 8 has been stopped in order for the controller 2 and the transmission/reception section 4 to shift to the zero-power mode, the MPU 3 controls the power supply section 8 to resume power supply to the controller 2 and the transmission/reception section 4. Further, in the case where the controller 2 and the transmission/reception section 4 have limited power consumption to zero by their own functions to shift to the zero-power mode, the MPU 3 performs an activation process by instructing each of them to become activated and reset.

Next, the transmission/reception section 4 included in the slave data transmission device 1b, which has been activated by the above-described step S84, shifts to the normal operation mode. Then, the transmission/reception section 4 reproduces a clock with the clock reproduction section of its own device (step S85), and transmits a lock signal LS to the transmission line 80b based on the clock outputted by its own reception PLL (step S86).

The operation for returning to the normal operation mode applied to the data transmission device 1b also applies to the other slave data transmission devices 1c to 1f. That is, as a result of the activity detection section 9 detecting an input of the electric signal Min inputted from the transmission line 80b, the data transmission device 1c returns to the normal operation mode; as a result of the activity detection section 9 detecting an input of the electric signal Min inputted from the transmission line 80c, the data transmission device 1d returns to the normal operation mode; as a result of the activity detection section 9 detecting an input of the electric signal Min inputted from the transmission line 80d, the data transmission device 1e returns to the normal operation mode; and, as a result of the activity detection section 9 detecting an input of the electric signal Min inputted from the transmission line 80e, the data transmission device 1f returns to the normal operation mode. That is, as a result of the combination of these return operations, the return to the zero-power mode is performed in regular order, starting with the master data transmission device 1a. Then, the transmission/reception section 4 of the data transmission device 1f reproduces a clock with the clock reproduction section of its own device, and transmits a lock signal LS to the transmission line 80f based on the clock outputted from the reception PLL.

After transmitting the lock signal LS to the data transmission device 1b at the above-described step S44, the master data transmission device 1a continues to be ready for a reception of the lock signal LS transmitted from the data transmission device 1f via the transmission line 80f (step S45). Then, if the slave data transmission device 1f performs the above-described step S86, thereby outputting the lock signal LS as the electric signal Mout to the transmission line 80f, the transmission/reception section 4 included in the master data transmission device 1a receives the lock signal LS from the transmission line 80f and reproduces the clock with the clock reproduction section of its own device. Thus, clock synchronization of the entire data transmission system is established.

Thereafter, the data transmission devices 1a to 1f transmit and receive a training signal for setting a criterion for data reception between them, thereby setting a criterion for data determination in the normal operation mode, and then start data transmission and reception (steps S46 and S87). Then, the process according to this flowchart is completed.

As described above, the data transmission system in which a plurality of data transmission devices are connected via the transmission lines so as to form a ring structure and in which the data transmission devices electrically communicate with one another in a single direction turns off the controller and transmission/reception section included in each data transmission device in the zero-power mode, in which power of main hardware is turned off to suspend operation; therefore, power consumption is made extremely reduced in the zero-power mode. In addition, when the data transmission system returns from the zero-power mode to the normal operation mode, the master data transmission device returns to the normal operation mode upon agreement with a predetermined condition for return being obtained. In addition, the other slave data transmission devices return in combination, as a result of detecting, with the activity detection section, an electric signal transmitted from a preceding data transmission device. Therefore, for example, even in the case of a data transmission system where the MOST is used as the communications protocol to perform electrical communication, it is possible to allow the entire system to return easily.

The activity detection section 9 provided in the data transmission device 1 has been described as being disposed outside the transmission/reception section 4 independently. Note that, however, it may be disposed inside a transmission/reception section 4 composed of an LSI. In this case, if it is so arranged that only the activity detection section 9 disposed inside the LSI operates in the zero-power mode, the return to the normal operation mode is accomplished in a manner similar to that of the above-described flowcharts. In addition, the foregoing description refers to the case where the data transmission device 1 that starts the operation for returning the data transmission system from the zero-power mode to the normal operation mode is the data transmission device 1a which serves as the master in clock synchronization. However, any of the other data transmission devices 1b to In may start the operation for returning to the normal operation mode. In other words, even in the case where any one of the slave data transmission devices 1b to 1n first sends a lock signal LS, the activity detection section 9 of each of the other data transmission devices is able to perform activation by detecting an electric signal Min.

### INDUSTRIAL APPLICABILITY

A data transmission device, a data transmission system, and a data transmission method according to the present invention realize shifting in combination to the zero-power mode which considerably reduces power consumption of an entire device, and are usable as a device included in a system in which each device is connected via a transmission line so as to form a ring structure or the like to perform electrical communication, or as the system or the like.

## Claims

1. A data transmission device (1) connected to a ring-type data transmission network (80), which electrically communicates with another device connected to the ring-type data transmission network via a transmission line in a unidirectional manner, the data transmission device comprising:
a processing section (2) for processing received data and data to be transmitted based on a predetermined communications protocol;
a reception section (5) for receiving an electric signal (Min) sent from a preceding device (1) connected to the ring-type data transmission network and outputting data (RX) contained in the electric signal to the processing section (2);
a transmission section (6) for converting a result (TX) of a process by the processing section (2) into an electric signal (Mout) and transmitting the electric signal to a successive device (1) connected to the ring-type data transmission network;
a power supply section (8) for supplying power to the processing section (2), the reception section (5), and the transmission section (6); and
a control section (3) for controlling operation of the processing section, the reception section, and the transmission section in accordance with an operation mode of its own device, wherein,
the reception section detects cessation of the electric signal sent from the preceding device,
if the reception section detects the cessation of the electric signal,
the reception section transmit to the control section a data cessation signal for indicating the cessation, and
the power supply section stops supplying power to the processing section, the reception section, and the transmission section.

2. The data transmission device according to claim 1, wherein,
based on the data cessation signal transmitted from the reception section, the control section stops operation of the processing section.

3. The data transmission device according to claim 1, wherein,
based on the data cessation signal transmitted from the reception section, the control section outputs a signal for stopping operation of the reception section and the transmission section,
in response to the signal outputted from the control section in response to the detection, the reception section stops operating, and
in response to the signal outputted from the control section in response to the detection, the transmission section stops operating and stops sending the electric signal to the successive device.

4. The data transmission device according to claim 1, wherein,
based on the data cessation signal transmitted from the reception section, the control section performs control of stopping the power supply section from supplying power to the processing section, the reception section, and the transmission section.

5. The data transmission device according to claim 4, further comprising a signal monitoring section for detecting the electric signal sent from the preceding device and transmitting, to the control section, an electric-signal detection signal for indicating the detection, wherein,
if suspended sending of the electric signal sent from the preceding device is resumed, the signal monitoring section detects the electric signal sent from the preceding device, and transmits, to the control section, the electric-signal detection signal for indicating the detection,
based on the electric-signal detection signal transmitted from the signal monitoring section, the control section performs control of allowing the power supply section to start supplying power to the processing section, the reception section, and the transmission section to start operation of the processing section, the reception section, and the transmission section, and
by control of the control section, the transmission section starts operating and starts sending the electric signal to the successive device.

6. The data transmission device according to claim 5, wherein the electric signal which the transmission section sends to the successive device after starting operating by control of the control section is a lock signal for establishing clock synchronization.

7. The data transmission device according to claim 1, wherein the communications protocol used by the processing section is defined by Media Oriented Systems Transport, MOST.

8. A data transmission system including a plurality of data transmission devices connected via a transmission line so as to form a ring structure, in which the data transmission devices electrically communicate with one another in a unidirectional manner,
the data transmission devices each comprising:
a processing section for processing received data and data to be transmitted based on a predetermined communications protocol;
a reception section for receiving an electric signal sent from a preceding data transmission device and outputting data contained in the electric signal to the processing section;
a transmission section for converting a result of a process by the processing section into an electric signal and transmitting the electric signal to a successive data transmission device;
a power supply section for supplying power to the processing section, the reception section, and the transmission section of its own device; and
a control section for controlling operation of the processing section, the reception section, and the transmission section in accordance with an operation mode of its own device,
wherein,
in at least one of the data transmission devices, the control section stops operation of the processing section, the reception section, and the transmission section of its own device based on a predetermined condition for shift, and the transmission section stops transmission of the electric signal, and
in another data transmission device,
the reception section of its own device detects cessation of the electric signal sent from the preceding data transmission device,
if the reception section detects the cessation of the electric signal,
the reception section transmits, to the control section of its own device, a data cessation signal for indicating the cessation; and
the power supply section of its own device stops supplying power to the processing section, the reception section, and the transmission section.

9. The data transmission system according to claim 8, wherein,
in the other data transmission device,
based on the data cessation signal transmitted from the reception section of its own device, the control section stops operation of the processing section of its own device.

10. The data transmission system according to claim 8, wherein,
in the other data transmission device,
based on the data cessation signal transmitted from the reception section of its own device, the control section outputs a signal for stopping operation of the reception section and the transmission section of its own device,
in response to the signal outputted from the control section of its own device in response to the detection, the reception section stops operating, and
in response to the signal outputted from the control section of its own device in response to the detection, the transmission section stops operating and stops sending the electric signal to the successive data transmission device.

11. The data transmission system according to claim 8, wherein,
based on the data cessation signal transmitted from the reception section of its own device, the control section performs control of stopping the power supply section of its own device from supplying power to the processing section, the reception section, and the transmission section.

12. The data transmission system according to claim 11, wherein,
the data transmission devices each further comprise a signal monitoring section for detecting the electric signal sent from the preceding data transmission device and transmitting, to the control section, an electric-signal detection signal for indicating the detection,
in at least one of the data transmission devices, based on a predetermined return condition, the control section performs control of allowing the power supply section to start supplying power to the processing section, the reception section, and the transmission section of its own device in stopped state to start operation of the processing section, the reception section, and the transmission section, and the transmission section resumes the transmission of the electric signal, and
in another data transmission device, if suspended sending of the electric signal sent from the preceding data transmission device is resumed, the signal monitoring section detects the electric signal sent from the preceding data transmission device, and transmits, to the control section of its own device, the electric-signal detection signal for indicating the detection; based on the electric-signal detection signal transmitted from the signal monitoring section, the control section performs control of allowing the power supply section to start supplying power to the processing section, the reception section, and the transmission section of its own device to start operation of the processing section, the reception section, and the transmission section; and the transmission section starts operating and starts sending the electric signal to the successive data transmission device.

13. The data transmission system according to claim 12, wherein the electric signal which each transmission section sends to the successive data transmission device after starting operating by control of the control section is a lock signal for establishing clock synchronization with each other.

14. The data transmission system according to claim 13, wherein the data transmission device which resumes the transmission of the electric signal based on the predetermined return condition is a master, which performs data transmission with a clock held thereby and is connected to the data transmission system.

15. The data transmission system according to claim 8, wherein the communications protocol used by the processing section is defined by Media Oriented Systems Transport, MOST.

16. A data transmission method in which a plurality of nodes are connected via a transmission line so as to form a ring structure and each node electrically communicates with one another in a unidirectional manner, the method comprising:
a processing step, performed by each node, of processing received data and data to be transmitted based on a predetermined communications protocol;
a reception step, performed by each node, of receiving an electric signal sent from a preceding node and sending data contained in the electric signal to the processing step;
a transmission step, performed by each node, of transmitting a result of a process by the processing step to a successive node as an electric signal;
a power supply step of supplying power used for operation in the processing step, the reception step, and the transmission step; and
a control step, performed by each node, of controlling operation of the processing step, the reception step, and the transmission step in accordance with an operation mode, wherein,
in at least one of the nodes, the control step stops operation by the processing step, the reception step, and the transmission step of the node based on a predetermined condition for shift, and the transmission step stops transmission of the electric signal, and
in another node,
the reception step of its own node detects cessation of the electric signal sent from the preceding node,
if the reception step of its own node detects the cessation of the electric signal,
the reception section transmits, to the control section of its own device, a data cessation signal for indicating the cessation; and
the power supply step of its own node stops supplying power used for operation of the processing step, the reception step, and the transmission step of its own node.

17. The data transmission method according to claim 16, wherein,
in the other node,
based on the notification sent by the reception step of its own node, the control step stops operation by the processing step of its own node.

18. The data transmission method according to claim 16, wherein,
in the other node,
based on the notification sent by the reception step of its own node, the control step sends a notification for stopping operation by the reception step and the transmission step of its own node,
in response to the notification sent by the control step of its own node in response to the detection, the reception step stops operation, and
in response to the notification sent by the control step of its own node in response to the detection, the transmission step stops operation and stops sending the electric signal to the successive node.

19. The data transmission method according to claim 16, wherein,
based on the notification sent by the reception step of its own node, the control step performs control of stopping the power supply step of its own node from supplying power used for operation of the processing step, the reception step, and the transmission step.

20. The data transmission method according to claim 19, wherein,
the nodes each further comprise a signal monitoring step of detecting the electric signal sent from the preceding node and sending, to the control step, a notification indicating the detection,
in at least one of the nodes, based on a predetermined return condition, the control step performs control of allowing the power supply step to start supplying power used for operation of the processing step, the reception step, and the transmission step of its own node in stopped state to start operation by the processing step, the reception step, and the transmission step, and the transmission step resumes the transmission of the electric signal, and
in another node, if suspended sending of the electric signal sent from the preceding node is resumed, the signal monitoring step detects the electric signal sent from the preceding node, and sends, to the control step of its own node, the notification indicating the detection; based on the notification indicating the detection sent by the signal monitoring step, the control step performs control of allowing the power supply step to start supplying power used for operation of the processing step, the reception step, and the transmission step of its own node to start operation by the processing step, the reception step, and the transmission step; and operation by the transmission step is started to start the sending of the electric signal to the successive node.

21. The data transmission method according to claim 20, wherein the electric signal which each transmission step sends to the successive node after starting operation by control of the control step is a lock signal for establishing clock synchronization with each other.

22. The data transmission method according to claim 21, wherein the node which resumes the transmission of the electric signal based on the predetermined return condition is a master, which performs data transmission with a clock held thereby.

23. The data transmission method according to claim 16, wherein the communications protocol used by the processing step is defined by Media Oriented Systems Transport, MOST,

## Patentansprüche

1. Datenübertragungsvorrichtung (1), die mit einem Ring-Datenübertragungsnetzwerk (80) verbunden ist und mit einer anderen Vorrichtung, die mit dem Ring-Datenübertragungsnetzwerk verbunden ist, über eine Übertragungsleitung unidirektional elektrisch kommuniziert, mit:
einer Verarbeitungseinheit (2) zum Verarbeiten von empfangenen Daten und von zu sendenden Daten auf Grund eines festgelegten Kommunikationsprotokolls;
einer Empfangseinheit (5) zum Empfangen eines elektrischen Signals (Min), das von einer vorhergehenden Vorrichtung (1) gesendet wird, die mit dem Ring-Datenübertragungsnetzwerk verbunden ist, und zum Ausgeben von Daten (RX), die in dem elektrischen Signal enthalten sind, an die Verarbeitungseinheit (2);
einer Sende-Einheit (6) zum Umwandeln eines Ergebnisses (TX) eines von der Verarbeitungseinheit (2) durchgeführten Prozesses in ein elektrisches Signal (Mout) und zum Senden des elektrischen Signals an eine nachfolgende Vorrichtung (1), die mit dem Ring-Datenübertragungsnetzwerk verbunden ist;
einer Stromversorgungseinheit (8) zum Versorgen der Verarbeitungseinheit (2), der Empfangseinheit (5) und der Sende-Einheit (6) mit Strom und
einer Steuereinheit (3) zum Steuern des Betriebs der Verarbeitungseinheit, der Empfangseinheit und der Sende-Einheit entsprechend einem Betriebsmodus ihrer eigenen Vorrichtung,
wobei
die Empfangseinheit das Ende des elektrischen Signals detektiert, das von der vorhergehenden Vorrichtung gesendet wird, und
in dem Fall, dass die Empfangseinheit das Ende des elektrischen Signals detektiert, die Empfangseinheit ein Daten-Ende-Signal zum Anzeigen des Endes an die Steuereinheit sendet und die Stromversorgungseinheit die Stromversorgung für die Verarbeitungseinheit, die Empfangseinheit und die Sende-Einheit unterbricht.

2. Datenübertragungsvorrichtung nach Anspruch 1, **dadurch gekennzeichnet, dass** die Steuereinheit den Betrieb der Verarbeitungseinheit auf Grund des Daten-Ende-Signals unterbricht, das von der Empfangseinheit gesendet wird.

3. Datenübertragungsvorrichtung nach Anspruch 1, **dadurch gekennzeichnet, dass**
die Steuereinheit auf Grund des Daten-Ende-Signals, das von der Empfangseinheit gesendet wird, ein Signal zum Unterbrechen des Betriebs der Empfangseinheit und der Sende-Einheit ausgibt,
die Empfangseinheit in Reaktion auf das Signal, das von der Steuereinheit in Reaktion auf die Detektion ausgegeben wird, ihren Betrieb unterbricht und
die Sende-Einheit in Reaktion auf das Signal, das von der Steuereinheit in Reaktion auf die Detektion ausgegeben wird, ihren Betrieb unterbricht und das elektrische Signal nicht mehr an die nachfolgende Vorrichtung sendet.

4. Datenübertragungsvorrichtung nach Anspruch 1, **dadurch gekennzeichnet, dass** die Steuereinheit auf Grund des Daten-Ende-Signals, das von der Empfangseinheit gesendet wird, die Stromversorgungseinheit so steuert, dass sie die Versorgung der Verarbeitungseinheit, der Empfangseinheit und der Sende-Einheit mit Strom unterbricht.

5. Datenübertragungsvorrichtung nach Anspruch 4, die weiterhin eine Signal-Überwachungseinheit zum Detektieren des elektrischen Signals, das von der vorhergehenden Vorrichtung gesendet wird, und zum Senden eines Elektrisches-Signal-Detektionssignals zum Anzeigen der Detektion an die Steuereinheit aufweist,
wobei
in dem Fall, dass das unterbrochene Senden des elektrischen Signals, das von der vorhergehenden Vorrichtung gesendet wird, wieder aufgenommen wird, die Signal-Überwachungseinheit das von der vorhergehenden Vorrichtung gesendete elektrische Signal detektiert und an die Steuereinheit das Elektrisches-Signal-Detektionssignal zum Anzeigen der Detektion sendet,
die Steuereinheit auf Grund des Elektrisches-Signal-Detektionssignals, das von der Signal-Überwachungseinheit gesendet wird, die Stromversorgungseinheit so steuert, dass sie beginnen kann, die Verarbeitungseinheit, die Empfangseinheit und die Sende-Einheit mit Strom zu versorgen, damit die Verarbeitungseinheit, die Empfangseinheit und die Sende-Einheit mit dem Betrieb beginnen können, und
durch die Steuerung der Steuereinheit die Sende-Einheit zu arbeiten beginnt und das elektrische Signal an die nachfolgende Vorrichtung zu senden beginnt.

6. Datenübertragungsvorrichtung nach Anspruch 5, **dadurch gekennzeichnet, dass** das elektrische Signal, das die Sende-Einheit an die nachfolgende Vorrichtung sendet, nachdem durch die Steuerung der Steuereinheit mit dem Betrieb begonnen worden ist, ein Sperrsignal zur Herstellung einer Taktsynchronisation ist.

7. Datenübertragungsvorrichtung nach Anspruch 1, **dadurch gekennzeichnet, dass** das Kommunikationsprotokoll, das von der Verarbeitungseinheit verwendet wird, von Media Oriented Systems Transport (MOST) definiert wird.

8. Datenübertragungssystem mit einer Vielzahl von Datenübertragungsvorrichtungen, die über eine Übertragungsleitung so verbunden sind, dass sie eine Ringstruktur bilden, wobei die Datenübertragungsvorrichtungen miteinander unidirektional elektrisch kommunizieren,
wobei die Datenübertragungsvorrichtungen jeweils Folgendes aufweisen:
eine Verarbeitungseinheit zum Verarbeiten von empfangenen Daten und von zu sendenden Daten auf Grund eines festgelegten Kommunikationsprotokolls;
eine Empfangseinheit zum Empfangen eines elektrischen Signals, das von einer vorhergehenden Datenübertragungsvorrichtung gesendet wird, und zum Ausgeben von Daten, die in dem elektrischen Signal enthalten sind, an die Verarbeitungseinheit;
eine Sende-Einheit zum Umwandeln eines Ergebnisses eines von der Verarbeitungseinheit durchgeführten Prozesses in ein elektrisches Signal und zum Senden des elektrischen Signals an eine nachfolgende Datenübertragungsvorrichtung;
eine Stromversorgungseinheit zum Versorgen der Verarbeitungseinheit, der Empfangseinheit und der Sende-Einheit ihrer eigenen Vorrichtung mit Strom und
eine Steuereinheit zum Steuern des Betriebs der Verarbeitungseinheit, der Empfangseinheit und der Sende-Einheit entsprechend einem Betriebsmodus ihrer eigenen Vorrichtung,
wobei
in mindestens einer der Datenübertragungsvorrichtungen Folgendes geschieht:
die Steuereinheit unterbricht den Betrieb der Verarbeitungseinheit, der Empfangseinheit und der Sende-Einheit ihrer eigenen Vorrichtung auf Grund einer festgelegten Umstellungsbedingung; und
die Sende-Einheit unterbricht das Senden des elektrischen Signals, und
in einer anderen Datenübertragungsvorrichtung Folgendes geschieht:
die Empfangseinheit ihrer eigenen Vorrichtung detektiert das Ende des elektrischen Signals, das von der vorhergehenden Datenübertragungsvorrichtung gesendet wird; und
in dem Fall, dass die Empfangseinheit das Ende des elektrischen Signals detektiert, sendet die Empfangseinheit ein Daten-Ende-Signal zum Anzeigen des Endes an die Steuereinheit ihrer eigenen Vorrichtung und die Stromversorgungseinheit ihrer eigenen Vorrichtung unterbricht die Stromversorgung für die Verarbeitungseinheit, die Empfangseinheit und die Sende-Einheit.

9. Datenübertragungssystem nach Anspruch 8, **dadurch gekennzeichnet, dass** in der anderen Datenübertragungsvorrichtung die Steuereinheit auf Grund des Daten-Ende-Signals, das von der Empfangseinheit ihrer eigenen Vorrichtung gesendet wird, den Betrieb der Verarbeitungseinheit ihrer eigenen Vorrichtung unterbricht.

10. Datenübertragungssystem nach Anspruch 8, **dadurch gekennzeichnet, dass** in der anderen Datenübertragungsvorrichtung Folgendes geschieht:
die Steuereinheit gibt auf Grund des Daten-Ende-Signals, das von der Empfangseinheit ihrer eigenen Vorrichtung gesendet wird, ein Signal zum Unterbrechen des Betriebs der Empfangseinheit und der Sende-Einheit ihrer eigenen Vorrichtung aus;
die Empfangseinheit unterbricht in Reaktion auf das Signal, das von der Steuereinheit ihrer eigenen Vorrichtung in Reaktion auf die Detektion ausgegeben wird, ihren Betrieb; und
die Sende-Einheit unterbricht in Reaktion auf das Signal, das von der Steuereinheit ihrer eigenen Vorrichtung in Reaktion auf die Detektion ausgegeben wird, ihren Betrieb und sendet das elektrische Signal nicht mehr an die nachfolgende Datenübertragungsvorrichtung.

11. Datenübertragungssystem nach Anspruch 8, **dadurch gekennzeichnet, dass** die Steuereinheit auf Grund des Daten-Ende-Signals, das von der Empfangseinheit ihrer eigenen Vorrichtung gesendet wird, die Stromversorgungseinheit ihrer eigenen Vorrichtung so steuert, dass sie die Versorgung der Verarbeitungseinheit, der Empfangseinheit und der Sende-Einheit mit Strom unterbricht.

12. Datenübertragungssystem nach Anspruch 11, **dadurch gekennzeichnet, dass**
die Datenübertragungsvorrichtungen jeweils weiterhin eine Signal-Überwachungseinheit zum Detektieren des elektrischen Signals, das von der vorhergehenden Datenübertragungsvorrichtung gesendet wird, und zum Senden eines Elektrisches-Signal-Detektionssignals zum Anzeigen der Detektion an die Steuereinheit aufweisen,
in mindestens einer der Datenübertragungsvorrichtungen Folgendes geschieht:
auf Grund einer festgelegten Rückkehrbedingung steuert die Steuereinheit die Stromversorgungseinheit so, dass sie beginnen kann, die Verarbeitungseinheit, die Empfangseinheit und die Sende-Einheit ihrer eigenen Vorrichtung im Unterbrechungszustand mit Strom zu versorgen, damit die Verarbeitungseinheit, die Empfangseinheit und die Sende-Einheit mit dem Betrieb beginnen können; und
die Sende-Einheit nimmt das Senden des elektrischen Signals wieder auf, und
in einer anderen Datenübertragungsvorrichtung Folgendes geschieht:
in dem Fall, dass das unterbrochene Senden des elektrischen Signals, das von der vorhergehenden Datenübertragungsvorrichtung gesendet wird, wieder aufgenommen wird, detektiert die Signal-Überwachungseinheit das elektrische Signal, das von der vorhergehenden Datenübertragungsvorrichtung gesendet wird, und sendet an die Steuereinheit ihrer eigenen Vorrichtung das Elektrisches-Signal-Detektionssignal zum Anzeigen der Detektion;
auf Grund des Elektrisches-Signal-Detektionssignals, das von der Signal-Überwachungseinheit gesendet wird, steuert die Steuereinheit die Stromversorgungseinheit so, dass sie beginnen kann, die Verarbeitungseinheit, die Empfangseinheit und die Sende-Einheit ihrer eigenen Vorrichtung mit Strom zu versorgen, damit die Verarbeitungseinheit, die Empfangseinheit und die Sende-Einheit mit dem Betrieb beginnen können; und
die Sende-Einheit beginnt zu arbeiten und beginnt mit dem Senden des elektrischen Signals an die nachfolgende Datenübertragungsvorrichtung.

13. Datenübertragungssystem nach Anspruch 12, **dadurch gekennzeichnet, dass** das elektrische Signal, das jede Sende-Einheit an die nachfolgende Vorrichtung sendet, nachdem durch die Steuerung der Steuereinheit mit dem Betrieb begonnen worden ist, ein Sperrsignal zur Herstellung einer gegenseitigen Taktsynchronisation ist.

14. Datenübertragungssystem nach Anspruch 13, **dadurch gekennzeichnet, dass** die Datenübertragungsvorrichtung, die das Senden des elektrischen Signals auf Grund der festgelegten Rückkehrbedingung wieder aufnimmt, ein Master ist, der die Datenübertragung mit einem dadurch gehaltenen Takt durchführt und mit dem Datenübertragungssystem verbunden ist.

15. Datenübertragungssystem nach Anspruch 8, **dadurch gekennzeichnet, dass** das Kommunikationsprotokoll, das von der Verarbeitungseinheit verwendet wird, von Media Oriented Systems Transport (MOST) definiert wird.

16. Datenübertragungsverfahren, bei dem mehrere Knoten so über eine Übertragungsleitung verbunden sind, dass eine Ringstruktur entsteht und die Knoten miteinander unidirektional elektrisch kommunizieren, mit den folgenden Schritten:
einem Verarbeitungsschritt, der von jedem Knoten ausgeführt wird, zum Verarbeiten von empfangenen Daten und von zu sendenden Daten auf Grund eines festgelegten Kommunikationsprotokolls;
einem Empfangsschritt, der von jedem Knoten ausgeführt wird, zum Empfangen eines elektrischen Signals, das von einem vorhergehenden Knoten gesendet wird, und zum Senden von Daten, die in dem elektrischen Signal enthalten sind, an den Verarbeitungsschritt;
einem Sendeschritt, der von jedem Knoten ausgeführt wird, zum Senden eines Ergebnisses eines in dem Verarbeitungsschritt durchgeführten Prozesses an einen nachfolgenden Knoten als ein elektrisches Signal;
einem Stromversorgungsschritt zum Bereitstellen von Strom für den Betrieb in dem Verarbeitungsschritt, dem Empfangsschritt und dem Sendeschritt und
einem Steuerschritt, der von jedem Knoten ausgeführt wird, zum Steuern des Betriebs in dem Verarbeitungsschritt, dem Empfangsschritt und dem Sendeschritt entsprechend einem Betriebsmodus,
wobei
in mindestens einem der Knoten Folgendes geschieht:
der Steuerschritt unterbricht den Betrieb in dem Verarbeitungsschritt, dem Empfangsschritt und dem Sendeschritt des Knotens auf Grund einer festgelegten Umstellungsbedingung; und
der Sendeschritt unterbricht das Senden des elektrischen Signals, und
in einem anderen Knoten Folgendes geschieht:
der Empfangsschritt des eigenen Knotens detektiert das Ende des elektrischen Signals, das von dem vorhergehenden Knoten gesendet wird; und
in dem Fall, dass der Empfangsschritt des eigenen Knotens das Ende des elektrischen Signals detektiert, sendet die Empfangseinheit ein Daten-Ende-Signal zum Anzeigen des Endes an die Steuereinheit ihrer eigenen Vorrichtung und der Stromversorgungsschritt des eigenen Knotens unterbricht die Stromversorgung für den Betrieb in dem Verarbeitungsschritt, dem Empfangsschritt und dem Sendeschritt des eigenen Knotens.

17. Datenübertragungsverfahren nach Anspruch 16, **dadurch gekennzeichnet, dass** in dem anderen Knoten der Steuerschritt auf Grund der Mitteilung, die von dem Empfangsschritt des eigenen Knotens gesendet wird, den Betrieb in dem Verarbeitungsschritt des eigenen Knotens unterbricht.

18. Datenübertragungsverfahren nach Anspruch 16, **dadurch gekennzeichnet, dass** in dem anderen Knoten Folgendes geschieht:
auf Grund der Mitteilung, die von dem Empfangsschritt des eigenen Knotens gesendet wird, sendet der Steuerschritt eine Mitteilung zum Unterbrechen des Betriebs in dem Empfangsschritt und dem Sendeschritt des eigenen Knotens;
in Reaktion auf die Mitteilung, die von dem Steuerschritt des eigenen Knotens in Reaktion auf die Detektion gesendet wird, unterbricht der Empfangsschritt den Betrieb; und
in Reaktion auf die Mitteilung, die von dem Steuerschritt des eigenen Knotens in Reaktion auf die Detektion gesendet wird, unterbricht der Sendeschritt den Betrieb und sendet kein elektrisches Signal mehr an den nachfolgenden Knoten.

19. Datenübertragungsverfahren nach Anspruch 16, **dadurch gekennzeichnet, dass** auf Grund der Mitteilung, die in dem Empfangsschritt des eigenen Knotens gesendet wird, der Steuerschritt den Stromversorgungsschritt des eigenen Knotens so steuert, dass er die Versorgung mit Strom unterbricht, der für den Betrieb in dem Verarbeitungsschritt, dem Empfangsschritt und dem Sendeschritt verwendet wird.

20. Datenübertragungsverfahren nach Anspruch 19, **dadurch gekennzeichnet, dass** die Knoten jeweils weiterhin einen Signal-Überwachungsschritt zum Detektieren des elektrischen Signals, das von dem vorhergehenden Knoten gesendet wird, und zum Senden einer Mitteilung, die die Detektion anzeigt, an den Steuerschritt aufweisen,
wobei
in mindestens einem der Knoten Folgendes geschieht:
auf Grund einer festgelegten Rückkehrbedingung steuert der Steuerschritt den Stromversorgungsschritt so, dass er beginnen kann, den Verarbeitungsschritt, den Empfangsschritt und den Sendeschritt des eigenen Knotens im Unterbrechungszustand mit Strom zu versorgen, damit der Betrieb in dem Verarbeitungsschritt, dem Empfangsschritt und dem Sendeschritt beginnen kann; und
der Sendeschritt nimmt das Senden des elektrischen Signals wieder auf, und
in einem anderen Knoten Folgendes geschieht:
in dem Fall, dass das unterbrochene Senden des elektrischen Signals, das von dem vorhergehenden Knoten gesendet wird, wieder aufgenommen wird, detektiert der Signal-Überwachungsschritt das elektrische Signal, das von dem vorhergehenden Knoten gesendet wird, und sendet an den Steuerschritt des eigenen Knotens die Mitteilung, die die Detektion anzeigt;
auf Grund der in dem Signalüberwachungsschritt gesendeten Mitteilung, die die Detektion anzeigt, steuert der Steuerschritt den Stromversorgungsschritt so, dass er beginnen kann, Strom bereitzustellen, der für den Betrieb in dem Verarbeitungsschritt, dem Empfangsschritt und dem Sendeschritt des eigenen Knotens verwendet wird, damit mit dem Betrieb in dem Verarbeitungsschritt, dem Empfangsschritt und dem Sendeschritt begonnen werden kann; und
der Betrieb in dem Sendeschritt wird begonnen, um mit dem Senden des elektrischen Signals an den nachfolgenden Knoten zu beginnen.

21. Datenübertragungsverfahren nach Anspruch 20, **dadurch gekennzeichnet, dass** das elektrische Signal, das jeder Sendeschritt an den nachfolgenden Knoten sendet, nachdem durch die Steuerung in dem Steuerschritt mit dem Betrieb begonnen worden ist, ein Sperrsignal zur Herstellung einer gegenseitigen Taktsynchronisation ist.

22. Datenübertragungsverfahren nach Anspruch 21, **dadurch gekennzeichnet, dass** der Knoten, der das Senden des elektrischen Signals auf Grund der festgelegten Rückkehrbedingung wieder aufnimmt, ein Master ist, der die Datenübertragung mit einem dadurch gehaltenen Takt durchführt.

23. Datenübertragungsverfahren nach Anspruch 16, **dadurch gekennzeichnet, dass** das Kommunikationsprotokoll, das in dem Verarbeitungsschritt verwendet wird, von Media Oriented Systems Transport (MOST) definiert wird.

## Revendications

1. Dispositif de transmission de données (1) connecté à un réseau de transmission de données de type en anneau (80), qui communique électriquement avec un autre dispositif connecté au réseau de transmission de données de type en anneau via une ligne de transmission de manière unidirectionnelle, le dispositif de transmission de données comprenant :
une section de traitement (2) pour le traitement de données reçues et de données à transmettre sur la base d'un protocole de communications prédéterminé ;
une section de réception (5) pour recevoir un signal électrique (Min) envoyé d'un dispositif précédent (1) connecté au réseau de transmission de données de type en anneau et pour délivrer en sortie des données (RX) contenues dans le signal électrique à la section de traitement (2) ;
une section de transmission (6) pour la conversion d'un résultat (TX) d'un processus par la section de traitement (2) en un signal électrique (Mout) et pour transmettre le signal électrique à un dispositif suivant (1) connecté au réseau de transmission de données de type en anneau ;
une section d'alimentation de puissance (8) pour alimenter de la puissance à la section de traitement (2), à la section de réception (5), et à la section de transmission (6) ; et
une section de commande (3) pour commander le fonctionnement de la section de traitement, de la section de réception, et de la section de transmission conformément à un mode de fonctionnement de son propre dispositif, dans lequel,
la section de réception détecte l'arrêt du signal électrique envoyé par le dispositif précédent,
si à section de réception détecte l'arrêt du signal électrique, la section de réception transmet à la section, de commande un signal d'arrêt de données pour indiquer l'arrêt, et
la section d'alimentation de puissance cesse d'alimenter de la puissance à la section de traitement, à la section de réception, et à la section de transmission.

2. Dispositif de transmission de données selon la revendication 1, dans lequel, sur la base du signal d'arrêt de données transmis de la section de réception, la section de commande arrête le fonctionnement de la section de traitement.

3. Dispositif de transmission de données selon la revendication 1, dans lequel, sur la base du signal d'arrêt de données transmis de la section de réception, la section de commande émet un signal pour arrêter le fonctionnement de la section de réception eL de la section de transmission,
en réponse au signal délivré en sortie de la section de commande en réponse à la détection, la section de réception cesse de fonctionner, et
en réponse au signal délivré en sortie de la section de commande en réponse à la détection, la section de transmission cesse de fonctionner et cesse d'envoyer le signal électrique au dispositif suivant.

4. Dispositif de transmission de données selon la revendication 1, dans lequel, sur la base du signal d'arrêt de données transmis par la section de réception, la section de commande exécute une commande pour que la section d'alimentation en puissance cesse d'alimenter de la puissance à la section de traitement, à la section de réception, et à la section de transmission.

5. Dispositif de transmission de données selon la revendication 4, comprenant en outre une section de surveillance de signaux pour détecter le signal électrique envoyé du dispositif précédent et pour transmettre, à 12. section de commande, un signal de détection de signal électrique pour indiquer la détection, dans lequel,
si un envoi qui a été suspendu du signal électrique envoyé par le dispositif précédent est repris, la section de surveillance de signal détecte le signal électrique envoyé par le dispositif précédent, et transmet, à la section de commande, le signal de détection de signal électrique pour indiquer la détection,
sur la base du signal de détection ce signal électrique transmis par la section de surveillance de signal, la section de commande exécute une commande pour permettre à la section d'alimentation de puissance de commencer à alimenter de la puissance à la section de traitement, à la section de réception, et à la section de transmission pour démarrer le fonctionnement de la section de traitement, de la section de réception, et de la section de transmission, et
par une commande de la section de commande, la section de transmission se met en marche et commence à envoyer le signal électrique au dispositif suivant.

6. Dispositif de transmission de données selon la revendication 5, dans lequel le signal électrique que la section de transmission envoie au dispositif suivant après le début du fonctionnement par une commande de la section de commande est un signal de verrouillage pour établir une synchronisation d'horloge.

7. Dispositif de transmission de données selon la revendication 1, dans lequel le protocole de communications utilisé par la section de traitement est défini par le protocole MOST, Media Oriented Systems Transport.

8. Système de transmission de données comportant une pluralité de dispositifs de transmission de données connectés via une ligne de transmission de sorte à former une structure en anneau, où les dispositifs de transmission de données communiquent électriquement entre eux de manière unidirectionnelle,
les dispositifs de transmission de données comprenant chacun :
une section de traitement pour le traitement de données reçues et de données à transmettre sur la base d'un protocole de communications prédéterminé :
une section de réception pour recevoir un signal électrique envoyé d'un dispositif de transmission de données précédent et pour délivrer en sortie des données contenues dans le signal électrique à la section de traitement ;
une section de transmission pour convertir un résultat d'un processus par la section de traitement en un signal électrique et pour transmettre le signal électrique à un dispositif de transmission de données suivant ;
une section d'alimentation de puissance pour alimenter de la puissance à la section de traitement, à la section de réception, et à la section de transmission de son propre dispositif ; et
une section de commande pour commander le fonctionnement de la section de traitement, de la section de réception, et de la section de transmission conformément à un mode de fonctionnement de son propre dispositif, où,
dans au moins l'un des dispositifs de transmission de données, la section de commande arrête le fonctionnement de la section de traitement, de la section de réception, et de à section de transmission de son propre dispositif sur la base d'une condition de changement prédéterminée, et la section de transmission arrête la transmission du signal électrique, et
dans un autre dispositif de transmission de données,
la section de réception de son propre dispositif détecte l'arrêt du signal électrique envoyé du dispositif de transmission de données précédent,
si la section de réception détecte l' arrêt du signal électrique, la section de réception transmet, à la section de commande de son propre dispositif, un signal d'arrêt de données pour indiquer l'arrêt ; et
la section d'alimentation de puissance de son propre dispositif cesse d'alimenter de la puissance à la section de traitement, à la section de réception, et à la section de transmission.

9. Système de transmission de données selon la revendication 8, dans lequel, dans l'autre dispositif de transmission de données,
sur la base du signal d'arrêt de données transmis par la section de réception de son propre dispositif, la section de commande arrête le fonctionnement de la section de traitement de son propre dispositif.

10. Système de transmission de données selon la revendication 8, dans lequel, dans l'autre dispositif de transmission de données,
sur la base du signal d'arrêt de données transmis de la section de réception de son propre dispositif, la section de commande délivre en sortie un signal pour arrêter le fonctionnement de la section de réception et de la section de transmission de son propre dispositif,
en réponse au signal délivré en sortie de la section de commande de son propre dispositif en réponse à la détection, la section de réception cesse de fonctionner, et
en réponse au signal délivré en sortie de la section de commande de son propre dispositif en réponse à la détection, la section de transmission cesse de fonctionner et cesse d'envoyer le signal électrique au dispositif de transmission de données suivant.

11. Système de transmission de données selon la revendication 8, dans lequel, sur la base du signal d'arrêt de données transmis de la section de réception de son propre dispositif, la section de commande exécute une commande pour que la section d'alimentation de puissance de son propre dispositif cesse d' alimenter de la puissance à la section de traitement, à la section de réception, et à la section de transmission.

12. Système de transmission de données selon la revendication 11, dans lequel,
chacun des dispositifs de transmission de données comprend en outre une section de surveillance de signal pour détecter le signal électrique envoyé du dispositif de transmission de données précédent et pour transmettre, à la section de commande, un signal de détection de signal électrique pour indiquer la détection,
dans au moins l'un des dispositifs de transmission de données, sur la base d'une condition de retour prédéterminée, la section de commande exécute une commande pour permettre à la section d'alimentation de puissance de commencer à alimenter de la puissance à la section de traitement, à la section de réception, et à la section de transmission de son propre dispositif dans un état d'arrêt pour démarrer le fonctionnement de la section de traitement, de la section de réception, et de la section de transmission, et la section de transmission reprend la transmission du signal électrique, et
dans un autre dispositif de transmission de données, si un envoi qui est suspendu du signal électrique envoyé du dispositif de transmission de données précédent est repris, la section de surveillance de signal détecte le signal électrique envoyé du dispositif de transmission de données précédent, et transmet, à la section de commande de son propre dispositif, le signal de détection de signal électrique pour indiquer la détection ; sur la base du signal de détection de signal électrique transmis de la section de surveillance de signal, la section de commande exécute une commande pour permettre à la section d'alimentation de puissance de commencer à alimenter de la puissance à la section de traitement, à la section de réception, et à la section de transmission de son propre dispositif pour démarrer le fonctionnement de la section de traitement, de la section de réception, et de la section de transmission ; la section de transmission se met en marche et commence à envoyer le signal électrique au dispositif de transmission de données suivant.

13. Système de transmission de données selon la revendication 12, dans lequel le signal électrique que chaque section de transmission envoie au dispositif de transmission de données suivant après le début du fonctionnement par une commande de la section de commande est un signal de verrouillage pour établir une synchronisation d'horloge entre elles.

14. Système de transmission de données selon la revendication 13, dans lequel le dispositif de transmission de données qui reprend la transmission du signal électrique sur la base de la condition de retour prédéterminée est un maître, qui exécute une transmission de données avec une horloge maintenue ainsi et est relié au système de transmission de données.

15. Système de transmission de données selon la revendication 8, dans lequel le protocole de communications utilisé par la section de traitement est défini par le protocole MOST, Media Oriented Systems Transport.

16. Procédé de transmission de données dans lequel une pluralité de noeuds sont connectés via une ligne de transmission de sorte à former une structure en anneau et chaque noeud communique électriquement avec un autre de manière unidirectionnelle, le procédé comprenant:
une étape de traitement, exécutée par chaque noeud, pour traiter des données reçues et des données à transmettre sur la base d'un protocole de communications prédéterminé ;
une étape de réception, exécutée par chaque noeud, pour recevoir un signal électrique envoyé par un noeud précédent pour envoyer des données contenues dans le signal électrique à l'étape de traitement ;
une étape de transmission, exécutée par chaque noeud, pour transmettre un résultat d'un processus par l'étape de traitement à un noeud suivant sous forme de signal électrique ;
une étape d'alimentation de puissance pour alimenter de la puissance utilisée pour le fonctionnement dans l'étape de traitement, l'étape de réception, et l'étape de transmission ; et
une étape de commande, exécutée par chaque noeud, pour commander le fonctionnement de l'étape de traitement, de l'étape de réception, et de l'étape de transmission conformément à un mode de fonctionnement, dans lequel,
dans au moins l'un des noeuds, l'étape de commande arrête le fonctionnement par l'étape de traitement, l'étape de réception, et l'étape de transmission du noeud sur la base d'une condition de changement prédéterminée, et l'étape de transmission arrête la transmission du signal électrique, et
dans un autre noeud, l'étape de réception de son propre noeud détecte l'arrêt du signal électrique envoyé par le noeud précédent,
si l'étape de réception de son propre noeud détecte l'arrêt du signal électrique, la section de réception transmet, à la section de commande de son propre dispositif, un signal d'arrêt de données pour indiquer l'arrêt ; et
l'étape d'alimentation de puissance de son propre noeud cesse d'alimenter de la puissance utilisée pour le fonctionnement de l'étape de traitement, de l'étape de réception, et de l'étape de transmission de son noeud.

17. Procédé de transmission de données selon la revendication 16, dans lequel, dans l'autre noeud,
sur la hase de la notification envoyée par l'étape de réception de son propre noeud, l'étape de commande arrête le fonctionnement par l'étape de traitement de son propre noeud.

18. Procédé de transmission de données selon la revendication 16, dans lequel, dans l'autre noeud,
sur la base de la notification envoyée par l'étape de réception de son propre noeud, l'étape de commande envoie une notification pour arrêter le fonctionnement par l'étape de la réception et l'étape de transmission de son propre noeud,
en réponse à la notification envoyée par l'étape de commande de son propre noeud en réponse à la détection, l'étape de réception cesse de fonctionner, et
en réponse à la notification envoyée par l'étape de commande de son propre noeud en réponse à la détection, l'étape de transmission cesse de fonctionner et cesse d'envoyer le signal électrique au noeud suivant.

19. Procédé de transmission de données selon la revendication 16, dans lequel, sur la base de la notification envoyée par l'étape de réception de son propre noeud, l'étape de commande exécute une commande pour que l'étape d'alimentation de puissance de son propre noeud cesse l'alimentation de la puissance utilisée pour le fonctionnement de l'étape de traitement, de l'étape de réception, et de l'étape de transmission.

20. Procédé de transmission de données selon la revendication 19, dans lequel,
chacun des noeuds comprend en outre une étape de surveillance de signal pour détecter le signal électrique envoyé par le noeud précédent et pour envoyer, à l'étape de commande, une notification indiquant la détection,
dans au moins l'un des noeuds, sur la base d'une condition de retour prédéterminée, l'étape de commande exécute une commande pour permettre à l'étape d'alimentation de puissance de commencer à alimenter de à puissance utilisée pour le fonctionnement de l'étape de traitement, de l'étape de réception, et de l'étape de transmission de son noeud à l'état d'arrêt pour démarrer le fonctionnement par l'étape de traitement, l'étape de réception, et l'étape de transmission, et l'étape de transmission reprend la transmission du signal électrique, et
dans un autre noeud, si un envoi qui est suspendu du signal électrique envoyé par le noeud précédent est repris, l'étape de surveillance de signal détecte le signal électrique envoyé par le noeud précédent, et envoie, à l'étape de commande de son propre noeud, la notification indiquant la détection ; sur la base de la notification indiquant la détection envoyée par l'étape de surveillance des signaux, l'étape de commande exécute une commande pour permettre à l'étape d'alimentation de puissance de commencer à alimenter de la puissance utilisée pour le fonctionnement de l'étape de traitement, de l'étape de réception, et de l'étape de transmission de son propre noeud pour démarrer le fonctionnement par l'étape de traitement, l'étape de réception, et l'étape de transmission ; et le fonctionnement par l'étape de transmission par l'étape de transmission est démarré pour commencer l'envoi du signal électrique vers le noeud suivant.

21. Procédé de transmission de données selon la revendication 20, dans lequel le signal électrique que chaque étape de transmission envoie au noeud suivant après avoir commencé le fonctionnement par une commande de l'étape de commande est un signal de verrouillage pour établir une synchronisation d'horloge entre elles.

22. Procédé de transmission de données selon la revendication 21, dans lequel le noeud qui reprend la transmission du signal électrique sur la base de la condition de retour prédéterminée est un naître, qui exécute une transmission de données avec une horloge maintenue ainsi.

23. Procédé de transmission de données selon la revendication 16, dans lequel le protocole de communications utilisé par l'étape de traitement est défini par le protocole MOST, Media Oriented Systems Transport.
